# EUROPEAN PATENT APPLICATION

(11) **EP 2 641 909 A1**
(43) Date of publication of application: **25.09.2013**
(21) Application number: 12160130.6
(22) Date of filing: 19.03.2012
(51) Int. Cl.: C07F 9/535, B01J 31/26, B01J 31/28, B01J 31/34, C08F 2/06, C08F 4/12, C08F 4/22, C08F 4/26

(54) **Transition metal P-N complexes as polymerization catalysts**

(71) Applicant: LANXESS Deutschland GmbH, 50569 Köln (DE); University of Toronto, Toronto, ON M5G 1L7 (CA)
(72) Inventor: The designation of the inventor has not yet been filed
(74) Representative: Wichmann, Birgid

(57) **Abstract**

The present invention provides new metal complexes which can be advantageously used for homo- or copolymerization of at least one diene monomer optionally in the presence of one or more copolymerisable comonomers and which in particular provide cis-polydienes starting from conjugated dienes.

## Description

### FIELD OF THE INVENTION

The present invention relates to novel transition metal complexes, their preparation and their use in a process for polymerizing 1,3-dienes and optionally one or more further copolymerizable comonomers.

### BACKGROUND OF THE INVENTION

US 2010/0093920 A1 discloses catalyst compositions comprising a transition metal containing compound, a PNP compound, an alkylating agent and a fluorine containing compound. The PNP compound typically comprises a compound represented by the following formula 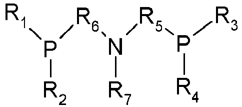 wherein R₁, R₂, R₃ and R₄ are each independently a monovalent organic group, R₅ and R₆ are each independently a bond, a divalent organic group or R₅ and R₆ are divalent organic groups that are substituted with a hydrocarbylene group connecting R₅ and R₆, and R₇ is a monovalent organic group, a hydrogen atom or a metal selected from groups 1 or 2 of the periodic table.

As preferred embodiments US 2010/0093920 A1 discloses the use of PNP compounds having e.g. the following formulae: 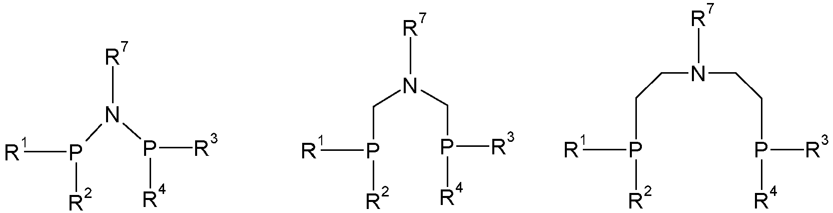 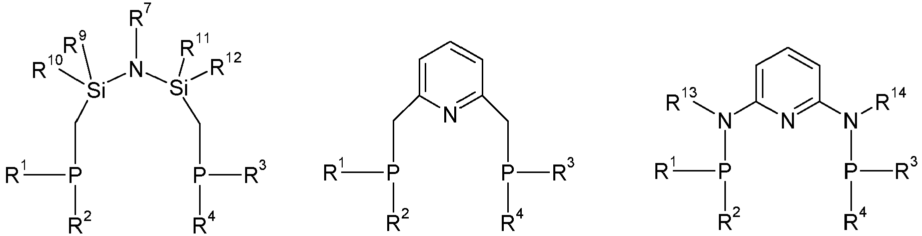 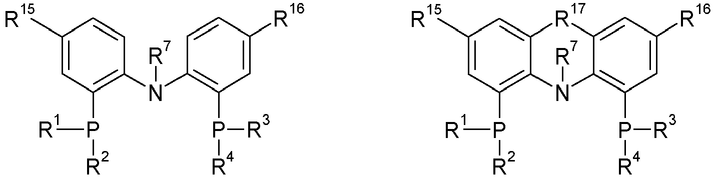 and combinations thereof, wherein
- R¹ to R¹⁶: except R⁷ are each independently a monovalent organic group,
- R¹⁷: is a divalent organic group, and
- R⁷: is a monovalent organic group, a hydrogen atom or a metal of groups 1 or 2 of the periodic table.

Such catalyst compositions are described to be used for the homo- or copolymerization of conjugated dienes. US 2010/0093920 A**,** however, does not disclose if these catalysts are able to catalyse a copolymerisation of conjugated dienes with unsaturated monomers disposing of functional groups which might interfere with the catalyst. As transition metals, titanium, cobalt and nickel are disclosed. The addition of a PNP ligand to the polymerization increases the cis content of the polydienes, but significantly decreases the conversion which lowers the attractiveness of the process. Furtheron high catalyst loadings have to be used as well as undesired fluorine containing compounds, such as BF₃.

US 2009/0143551 A1 discloses a polymerization catalyst system for polymerizing dienes comprising
(a) a nickel N-heterocyclic carbene complex;
(b) an organoaluminium compound;
(c) a fluorine-containing compound; and
(d) optionally an alcohol.

More particularly the nickel N-heterocyclic carbene complex is a compound of the formula (I) or (II) 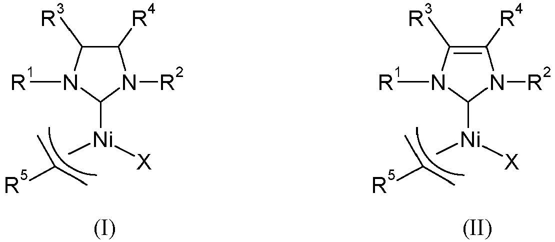 wherein
- R¹ and R²: are selected from the group consisting of C₁-C₁₂-alkyl, C₂-C₁₂-alkene, C₂-C₁₂-alkyne, phenyl, alkyl-substituted phenyl, and mixtures thereof and may all be identical or may all be separately selected but cannot be H,
- R³, R⁴ and R⁵: are selected from the group consisting of H, C₁-C₁₂-alkyl, C₂-C₁₂-alkene, C₂-C₁₂-alkyne, phenyl, alkyl-substituted phenyl, and mixtures thereof and may all be identical or may all be separately selected, and
- X: is a halogen.

According to US-A-2009/0143551 high catalyst loadings have to be used and similar to US-A-2010/0093920 the use of a fluorine containing additive as BF₃ is required. Reaction times are long, ranging from 4h to 24h to reach 63-93% conversion. US-A-2009/0143551 is also directed to the homo- and copolymerization of conjugated dienes only, a copolymerization with different monomers bearing functional groups is not mentioned.

WO 2007/015074 A1 discloses a process for producing homopolymers of conjugated dienes wherein the monomers are contacted with a catalyst comprising two or more different transition metal compounds and optionally one or more activators. It is further disclosed that a copolymerization of conjugated dienes with copolymerisable 1-olefins like ethylene, propylene, butene, hexene, 4-methylpentene-1, 1-octene, norbornene, substituted norbornenes and styrene is possible. The transition metals in the catalyst compounds are selected from a group 3-10 transition metal, lanthanide or actinide. Preferably the transition metal compounds are complexes containing neutral, monoanionic or dianionic ligands. Such ligands can be monodentate, bidentate, tridentate or tetradentate and they comprise at least one N, P, O or S atom. More preferably the transition metal complex comprise a first transition metal selected from Cr, Mo and W, and a second transition metal selected from Fe, Co and Ni. Most preferably cobalt and chromium based transition metal complexes are used. However, WO 2007/015074 A1 - apart from mandatorily requiring at least two different metal compounds - typically uses an activator like organoaluminium as MAO or organoboron compounds in a very high ratio compared to the catalyst metal. WO 2007/015074 A1 describes e.g. a ratio of MAO to Cr of 6000. In the comparative examples of WO 2007/015074 A1 the use of only one transition metal compound results in instable and often rather poor conversions rates of 1,3-butadiene to polybutadiene (see e.g. Table 6 of WO 2007/015074 A1).

Tridentate transition metal compounds disclosed in WO 2007/015074 A1 can e.g. have the formula 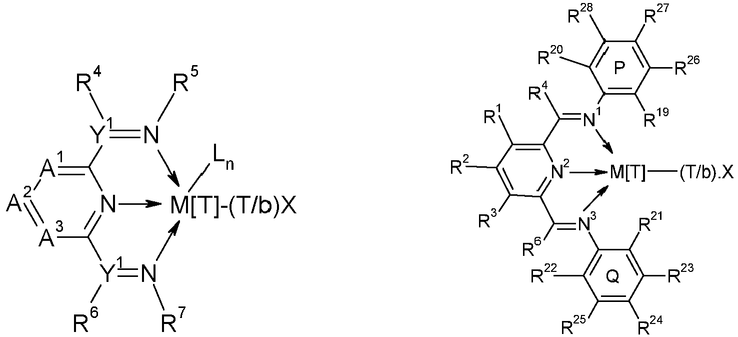 in which formulae the respective atoms and groups have the meanings as defined in WO 2007/015074. The catalysts of WO 2007/015074 A1 are suited for various polymerization of dienes. It is described that chromium based complex catalysts favour the formation of trans-polydienes, while cobalt containing complexes favour the formation of cis-polydienes. Hence, the combination of at least two different catalysts is disclosed as allowing to influence the polymer's microstructure, i.e. the preparation of a specifically desired ratio of cis to trans polymers.

WO 03/033545 A2 discloses a metal complex catalyst composition comprising
a) at least one specifically defined metal complex
b) at least one activator compound,
c) optionally a transition metal halide compound component,
d) optionally a catalyst modifier,
e) optionally one (or more) inorganic or polymeric support material(s).

Preferably the metal of the defined metal complex is a lanthanide metal, scandium, yttrium, vanadium, chromium, cobalt or nickel. The catalysts are used to homo- or copolymerize conjugated diene monomers. The defined metal complexes may contain ligands with a divalent bridging group joining two groups each of which comprise P or N.

In Dalton Trans. 2011, 40, 4918 the bis-phosphinimine ligands O(1,2-C₆H₄N=PPh₃)₂, HN(1,2-C₂H₄N=PR₃)₂ (with R=Ph or iPr), MeN(1,2-C₂H₄N=PPh₃)₂ and HN(1,2-C₆H₄N=PPh₃)₂ were prepared. Employing these ligands, the monometallic Pd and Ni complexes O(1,2-C₆H₄N=PPh₃)₂ PdCl₂, [RN(1,2-C₂H₄N=PPh₃)₂PdCl] [Cl] (with R = H or Me), [HN(1,2-C₂H₄N=PiPr₃)₂PdCl][Cl], [MeN(1,2-C₂H₄N=PPh₃)₂PdCl][PF₆], [HN(1,2-C₂H₄N=PPh₃)₂NiCl₂], [HN(1,2-C₂H₄N=PR₃)₂NiCl][X] (with X=Cl, and R = iPr; or X=PF₆ and R = Ph or iPr), and [HN(1,2-C₂H₄N=PPh₃)₂Ni(MeCN)₂][BF₄] were prepared and characterized, however, no disclosure at all is provided about any potential catalytic activity of these Pd and Ni complexes.

In Dalton Trans. 2011, 40, 2419 it is disclosed that the accessible bis-phosphinimine pincer ligand 1,3-C₆H₄(CH₂N=PPh₃)₂ is non-innocent in the formation of a phosphineimineaminophophine pincer complex. No disclosure at all is provided about any potential catalytic activity of this Pd complex.

According to Dalton Trans. 2011, 40, 5419 it is possible to prepare complexes of the form [HN(CH₂CH₂N=PPh₃)₂Ni-Ar][X] with Ar = C₆H₄F or C₆H₅ and X= Cl, Br or PF₆. No disclosure is provided about any potential catalytic activity of these Ni complexes.

Therefore, it was the **object of the present invention** to provide novel catalysts for polymerizing 1,3-dienes in particular in order to obtain cis-polydienes and in particular for copolymerizing 1,3-dienes together with one or more further copolymerizable monomers which bear polar functional groups.

### SUMMARY OF THE INVENTION

The above-mentioned objects have now been solved by providing novel metal complexes which are suited to be used to catalyze 1,3-diene- mono- or copolymerization.

Accordingly the present invention provides metal complexes according to formula (I) 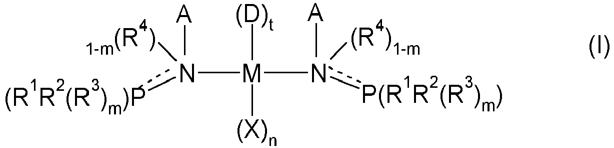 wherein
- M: represents a metal from Groups 3 to 9 of the Periodic Table of Elements or a lanthanide,
- X: are identical or different ligands,
- n: is 1, 2 or 3,
- R¹, R², R³, and R⁴: are identical or different and represent H, alkyl, cycloalkyl, aryl or heteroaryl groups,
- m: is 0 or 1,
- D: represents a ligand being able to act as a two electron donor,
- t: is 0 or 1,
- A: are identical or different monovalent groups or in the alternative both can be linked at the same time to D, if t = 1, with both A then representing divalent groups, and
wherein the bonds between P and N represent a double bond each, if m = 1 and in the alternative represent a single bond each, if m = 0.

In the above formula (I) and to the extent further mentioned in this application "N" stands for nitrogen and "P" for phosphorus.

The invention further relates to a process for preparing a polymer containing repeating units of at least one diene monomer, preferably a conjugated diene monomer, comprising polymerizing at least one diene monomer, preferably conjugated diene monomer, in the presence of a metal complex according to general formula (I).

### DETAILED DESCRIPTION OF THE INVENTION

The present invention provides the above mentioned novel metal complexes of general formula (I). Advantageously the use of such metal complexes results in a high catalytic activity even if the metal complex is used with very low loadings (e.g. as low as 0.0005 mmol). The use of these complexes allows to produce polydienes with a specific microstructure. In particular Cr-based complexes according to formula (I) enable the production of high *cis*-1,4-polybutadiene which is unusual for Cr based systems; other Cr based systems produce predominantly 1,2-polybutadiene with the exception of the Chromium-based catalysts of WO 2007/015074 A1 which produces trans-1,4-polybutadiene exclusively. The high cis-1,4-polydienes obtained in the process according to the present invention will typically have a cis 1,4 content of at least about 85%, preferably at least 90%, more preferably at least 95% and most preferably at least 97%. The inventive process allows the preparation of polymers with a broad spectrum of molecular weights (e.g. of from 50,000 to 2,000,000 g/mol), a molecular weight distribution of from about 1.7 to 4 and a vinyl content of preferably less than 2.5%. Additionally and surprisingly the novel metal complexes allow the successful copolymerization with comonomers bearing polar functional groups. The polymers obtained with the process according to the present invention can be used for numerous applications, e.g. in tire treads, tire sidewalls, either alone or blended with other elastomers in order to obtain certain mechanical and/or dynamical properties.

### Preferred embodiments of the catalyst structures:

The term "substituted" used for the purposes of the present patent application means that a hydrogen atom on an indicated moiety or atom has been replaced by one of the groups indicated in each case, with the proviso that the valency of the atom indicated is not exceeded and the substitution leads to a stable compound.

For the purposes of the present patent application and invention, all the definitions of moieties, parameters or explanations given above or below in general terms or in preferred ranges can be combined with one another in any way, i.e. including combinations of the respective ranges and preferred ranges.

### Metal M:

In the metal complex pursuant to general formula (I)
- **M**: represents a metal from Group 3 to 9 of the Periodic Table of Elements or a lanthanide.
- **M**: is preferably Sc, Y, Ti, Zr, Hf, V, Nb, Ta, Cr, Mo, W, Mn, Fe, Ru, Co or Nd, more preferably Cr, Mo, W, Fe, Ru, Co, or Nd and most preferably Cr, Fe, Co or Nd.

### Ligand X:

In the metal complex pursuant to general formula (I)
- **X**: are identical or different ligands, preferably anionic coordinating or weakly coordinating ligands. In the alternative X may also represent a non-coordinating anion. In such case there is no bond between X and the metal M of the catalyst according to general formula (I).

In a more preferred embodiment
- **X**: are identical or different and represent halide, pseudohalide, alkyl, cycloalkyl, aryl, arylalkyl, alkoxy, aryloxy, alkyldiketonate, aryldiketonate, carboxylate, alkylsulfonate, arylsulfonate, alkylthiol, arylthiol, alkylsulfonyl or alkylsulfinyl groups, or an amide.

In another preferred embodiment of the invention X can be, for example, fluoride, chloride, bromide, iodide, -CN, -N₃, -OCN, -NCO, -CNO, -SCN, -NCS, -SeCN, straight-chain or branched C₁-C₃₀-alkyl, C₃-C₂₀-cycloalkyl, C₆-C₂₄-aryl, weakly coordinating arylborate, C₁-C₂₀-alkoxy, C₆-C₂₄-aryloxy, C₃-C₂₀-alkyldiketonate, C₆-C₂₄-aryldiketonate, C₁-C₂₀-carboxylate, C₁-C₂₀-alkylsulfonate, C₆-C₂₄-arylsulfonate, C₁-C₂₀-alkylthiol, C₆-C₂₄-arylthiol, C₁-C₂₀-alkylsulfonyl, C₁-C₂₀-alkylsulfinyl, or non-coordinating substituted anions based on borates, phosphates, and antimonates.

The **alkyl groups** in the ligand X are usually each a straight-chain or branched C₁-C₃₀-alkyl, preferably C₁-C₂₄-alkyl, particularly preferably C₁-C₁₈-alkyl. C₁-C₁₈-Alkyl encompasses, for example, methyl, ethyl, n-propyl, isopropyl, n-butyl, sec-butyl, tert-butyl, n-pentyl, 1-methylbutyl, 2-methylbutyl, 3-methylbutyl, neopentyl, 1-ethylpropyl, 1,1-dimethylpropyl, 1,2-dimethylpropyl, n-hexyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, n-heptyl, n-octyl, n-nonyl, n-decyl, n-undecyl, n-dodecyl, n-tridecyl, n-tetradecyl, n-hexadecyl and n-octadecyl.

The **alkoxy groups** in the ligand X are usually each C₁-C₂₀-alkoxy, preferably C₁-C₁₀-alkoxy, particularly preferably methoxy, ethoxy, n-propoxy, isopropoxy, n-butoxy, sec-butoxy, tert-butoxy, n-pentoxy and n-hexoxy.

The **aryl groups** in the ligand X are aromatic groups, preferably having from 6 to 24 skeletal carbon atoms. As particularly preferred monocyclic, bicyclic or tricyclic carbocyclic aromatic radicals having from 6 to 14 skeletal carbon atoms, mention may be made by way of example of phenyl, biphenyl, naphthyl, phenanthrenyl or anthracenyl.

The **cycloalkyl groups** in the ligand X are identical or different and are usually each a C₃-C₂₀-cycloalkyl, preferably C₃-C₈-cycloalkyl, particularly preferably cyclopentyl and cyclohexyl.

The aforementioned alkyl, cycloalkyl, aryl and alkoxy fragments in the different meanings for ligand X are optionally substituted one or more times, e.g. by halogen groups, preferably fluorine, chlorine or bromine, CN, OH, NH₂ or NR'₂ radicals, where R' can in turn be C₁-C₃₀-alkyl or C₅-C₂₄-aryl.

In a particularly preferred embodiment, X are identical or different and are fluoride, chloride, bromide or iodide, C₁-C₅-alkyl, C₆-C₂₄-aryl, a fluorinated aryl borate, C₁-C₅-alkoxy, phenoxy, C₁-C₅-carboxylate, C₁-C₅-alkylsulphonate, C₁-C₅-alkylthiol, C₆-C₂₄-arylthiol, tetrafluoroborate, hexafluorophosphate, and hexafluoroantimonate

In a most preferred embodiment, X are identical and represent chloride, methyl, phenyl, benzyl, CF₃COO, CH₃COO, CFH₂COO, (CH₃)₃CO, (CF₃)₂(CH₃)CO, (CF₃)(CH₃)₂CO, PhO (phenoxy), MeO (methoxy), EtO (ethoxy), benzoate, tosylate (p-CH₃-C₆H₄-SO₃), mesylate (CH₃-SO₃) or CF₃SO₃ (trifluoromethanesulfonate (also called "triflate")).

### Index n:

The index n is 1, 2 or 3, preferably 2 or 3, depending on the center metal of the complex.

### Ligands R¹, R², R³, R⁴ and index m:

In the novel metal complexes of general formula (I) R¹, R², R³, and R⁴ are identical or different and represent H, alkyl, cycloalkyl, aryl, arylalkyl, or heteroaryl.

Preferably R¹, R², R³, and R⁴ are identical or different and represent H, branched or straight chain C₁-C₃₀-alkyl, C₃-C₂₀-cycloalkyl, C₆-C₂₄ aryl, C₇-C₂₅ arylalkyl, or C₆-C₂₄ heteroaryl, in which C₆-C₂₄ heteroaryl at least one carbon atom of the aromatic ring(s) is replaced by a heteroatom selected from nitrogen, oxygen and sulfur. More preferably R¹, R², R³, and R⁴ are identical or different and represent H, branched or straight chain C₁-C₂₀-alkyl, C₅-C₈-cycloalkyl, C₆-C₁₄ aryl, C₇-C₁₅ arylalkyl or C₆-C₁₄ heteroaryl, in which C₆-C₁₄ heteroaryl at least one carbon atom of the aromatic ring(s) is replaced by a heteroatom selected from nitrogen, oxygen and sulfur.

The aforementioned alkyl, cycloalkyl, aryl, arylalkyl and heteroaryl groups can be substituted one or more times, e.g. by halogen, preferably fluorine, chlorine or bromine, sulfonate, or C₁-C₈ alkyl, wherein such C₁-C₈ alkyl can in turn be substituted one or more times, e.g. by halogen, preferably fluorine.

Examples of heteroaryl moieties are pyridinyl, oxazolyl, benzofuranyl, dibenzofuranyl and quinolinyl.

In case of **m being 0,** the group P(R¹R²) contains P(III) and is bound via a single bond to the adjacent nitrogen. In case of **m being 1,** the group P(R¹R²R³) contains P(V) and is bound via a double bond to the adjacent nitrogen resulting in a phosphinimine structure.

In one preferred embodiment of the **group P(R¹R²)** R¹ and R² are identical and represent ethyl, i-propyl, i-butyl, t-butyl, cyclopentyl, cyclohexyl, benzyl, neopentyl, phenyl, p-tolyl, o-tolyl, CF₃, p-FC₆H₄, p-CF₃C₆H₄, C₆H₄-SO₃Na, or CH₂C₆H₄-SO₃Na.

In another preferred embodiment of the **group P(R¹R²R³)** R¹, R², and R³ are identical and represent ethyl, i-propyl, i-butyl, t-butyl, cyclopentyl, cyclohexyl, benzyl, neopentyl, phenyl, p-tolyl, o-tolyl, CF₃, p-FC₆H₄, p-CF₃C₆H₄, C₆H₄-SO₃Na, CH₂C₆H₄-SO₃Na,

### Group A:

In the novel metal complex of general formula (I) the groups A are identical or different monovalent groups or in the alternative both can be linked at the same time to D, if t=1, with A then both representing divalent groups.

**In one embodiment the groups A** are monovalent, identical or different and represent H, alkyl, cycloalkyl, aryl, arylalkyl or heteroaryl. Preferably the groups A are identical or different, more preferably identical, and represent H, branched or straight chain C₁-C₃₀-alkyl, C₃-C₂₀-cycloalkyl, C₆-C₂₄ aryl, C₇-C₂₅ arylalkyl or C₆-C₂₄ heteroaryl, in which C₆-C₂₄ heteroaryl at least one carbon atom of the aromatic ring(s) is replaced by a heteroatom selected from nitrogen, oxygen and sulfur. Even more preferably the groups A are identical or different and represent H, branched or straight chain C₁-C₂₀-alkyl, C₆-C₁₄ aryl, C₇-C₁₅ arylalkyl or C₆-C₁₄ heteroaryl, in which C₆-C₁₄ heteroaryl at least one carbon atom of the aromatic ring(s) is replaced by a heteroatom selected from nitrogen, oxygen and sulfur. In a particularly preferred embodiment the monovalent groups A are identical and represent methyl, ethyl, propyl, n-butyl, or phenyl, wherein the latter can be substituted with one or more substituents, preferably substituted with two C₁-C₄-alkyl substituents.

**In another embodiment if t=1 both groups A can represent divalent** moities and are each linked to the ligand D. In such case the groups A are identical or different and preferably mean C₁-C₂₀ alkylene, C₅-C₂₀ cycloalkylene or 1,2-phenylene, more preferably methylene, ethylene or 1,2-phenylene. The groups A preferably represent divalent moieties if m=1.

**Index t:** The index t is 0 or 1, preferably 1.

### Ligand D:

Ligand D is present in the metal complex of general formula (I) if t=1 and then means a ligand being able to act as a two electron donor.

**If t=1 and if the groups A are divalent moieties and both linked to D,** D preferably means -S-, -O-, -N(R⁵)-, -P(R⁵)-, -As(R⁵)-, arylene, heteroarylene, partially or fully saturated analogues of such arylene and heteroarylene moieties, more preferably 2,6-pyridinylene, 2,5-furanylene, 2,5-thiophenylene, 2,5-imidazolylene, wherein **R⁵** shall mean H, alkyl, cycloalkyl, aryl, arylalkyl, or heteroaryl, preferably H, branched or straight chain C₁-C₃₀-, more preferably C₁-C₂₀-alkyl; C₃-C₂₀-, more preferably C₅-C₈-cycloalkyl; C₆-C₂₄-, more preferably C₆-C₁₄ aryl; C₇-C₂₅, more preferably C₇-C₁₅ arylalkyl; or C₆-C₂₄, more preferably C₆-C₁₄ heteroaryl, in which at least one carbon atom of the aromatic ring(s) is replaced by a heteroatom selected from nitrogen, oxygen and sulfur. The aforementioned alkyl, cycloalkyl, aryl, arylalkyl and heteroaryl groups as meanings for R⁵ can be substituted one or more times, e.g. by halogen, preferably fluorine, chlorine or bromine, sulfonate, or C₁-C₈ alkyl, wherein such C₁-C₈ alkyl can in turn be substituted one or more times, e.g. by halogen, preferably fluorine.

**If t= 1 and if the groups A are not linked to D,** D is a monovalent ligand being able to act as a two electron donor including e.g. thiophene, furan, tetrahydrofuran, phosphine, sulfonated phosphine, phosphinimine, aminophosphine, phosphine oxide, phosphine sulfide, phosphineselenide, phosphate, phosphinite, phosphonite, phosphite, arsine, stibine, amine, amide, sulfoxide, sulfone, ether, carboxyl, nitrosyl, pyridine, thiol, thioether, selenoether, selenol, selenoxide or any other moiety able of acting as a 2 electron donor such as alkoxy, aryloxy, sulfone, alkyl, carbene, ketone, ester, pyridyl, substituted pyridyl, an imidazoline or imidazolidine ligand.

The term **"phosphine"** includes, for example, C₆-C₂₄-arylphosphine, C₁-C₁₀-alkylphosphine or C₃-C₂₀-cycloalkylphosphine ligands, which in turn may be further substituted one or more times, more particularly PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(isopropyl)₃, P(CHCH₃(CH₂CH₃))₃, P(cyclopentyl)₃, P(cyclohexyl)₃, P(neopentyl)₃ and P(neophenyl)₃.

The term **"sulfonated phosphine"** includes, e.g. a sulphonated C₆-C₂₄-arylphosphine or sulphonated C₁-C₁₀-alkylphosphine ligand.

The term **"phosphinite"** includes, for example, a C₆-C₂₄-arylphosphinite or C₁-C₁₀-alkylphosphinite ligand, more particulary phenyl diphenylphosphinite, cyclohexyl dicyclohexylphosphinite, isopropyl diisopropylphosphinite and methyl diphenylphosphinite.

The term **"phosphonite"** includes, for example, a C₆-C₂₄-arylphosphonite or C₁-C₁₀-alkylphosphonite ligand.

The term **"phosphite"** includes, for example, a C₆-C₂₄-aryl phosphite or C₁-C₁₀-alkyl phosphite ligand, more particularly triphenyl phosphite, tricyclohexyl phosphite, tri-tert-butyl phosphite, triisopropyl phosphite and methyl diphenyl phosphite.

The term **"arsine"** includes, for example, a C₆-C₂₄-arylarsine or C₁-C₁₀-alkylarsine ligand.

The term **"stibine"** includes, for example, triphenylstibine, tricyclohexylstibine and trimethylstibine.

The term **"amine"** includes, for example, a C₆-C₂₄-arylamine or C₁-C₁₀-alkylamine ligand.

The term **"amide"** includes, for example, a C₆-C₂₄-arylamide or C₁-C₁₀-alkylamide ligand.

The term **"sulfonate"** includes, for example, SO₃Na, trifluoromethanesulfonate, tosylate and mesylate.

The term **"sulfoxide"** includes, for example, a C₆-C₂₄-aryl sulfoxide or C₁-C₁₀-alkyl sulfoxide ligand, more particularly (CH₃)₂S(=O) and (C₆H₅)₂S=O.

The term **"ether"** includes, for example, a C₆-C₂₄-aryl ether or C₁-C₁₀-alkyl ether ligand.

The term **"thioether"** includes, for example, CH₃SCH₃, C₆H₅SCH₃, CH₃OCH₂CH₂SCH₃ and tetrahydrothiophene.

For the purposes of the present application, the term "pyridine" is used as a collective term for all nitrogen-containing ligands as are mentioned by, for example, Grubbs in WO-A-03/011455**.** Examples are: pyridine, picolines (α-, β- and γ-picoline), lutidines (2,3-, 2,4-, 2,5-, 2,6-, 3,4- and 3,5-lutidine), collidine (2,4,6-trimethylpyridine), trifluoromethylpyridine, phenylpyridine, 4-(dimethylamino)pyridine, chloropyridines, bromopyridines, nitropyridines, quinoline, pyrimidine, pyrrole, imidazole and phenylimidazole.

If D represents an imidazoline or imidazolidine ligand it has typically a structure corresponding to the general formulae (IIa) (imidazoline) or (IIb) (imidazolidine), 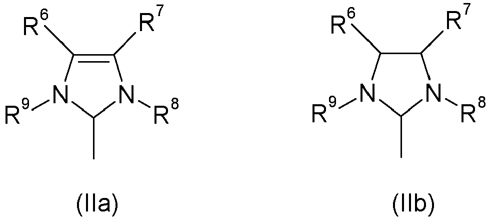 wherein R⁶, R⁷, R⁸, R⁹ are identical or different and are each hydrogen, straight-chain or branched C₁-C₃₀-alkyl, C₃-C₂₀-cycloalkyl, C₂-C₂₀-alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₀-aryloxy, C₂-C₂₀-alkoxycarbonyl, C₁-C₂₀-alkylthio, C₆-C₂₀-arylthio, C₁-C₂₀-alkylsulfonyl, C₁-C₂₀-alkylsulfonate, C₆-C₂₀-arylsulfonate or C₁-C₂₀-alkylsulfinyl or wherein R⁸ and R⁹ have the above mentioned meanings and simultaneously R⁶ and R⁷ jointly form a C₆-C₁₀ cyclic structure together with the two adjacent carbon atoms in the imidzolin or imidazoline ring.

Optionally one or more of the substituents R⁶, R⁷, R⁸, R⁹ can independently of one another, be substituted by one or more substituents, preferably straight-chain or branched C₁-C₁₀-alkyl, C₃-C₈-cycloalkyl, C₁-C₁₀-alkoxy or C₆-C₂₄-aryl, where these abovementioned substituents may in turn be substituted by one or more functional groups, preferably functional groups selected from the group consisting of halogen, in particular chlorine or bromine, C₁-C₅-alkyl, C₁-C₅-alkoxy and phenyl.

For the sake of clarity, it may be added that the structures of the imidazoline and imidazolidine ligands depicted in the general formulae (IIa) and (IIb) in the present application are equivalent to the structures (IIa') and (IIb') which are frequently also found in literature for this imidazoline/imidazolidine ligands and emphasize the carbene character of the imidazoline/imidazolidine ligands. This applies analogously to the associated preferred structures (III-a)-(III-o) depicted below.

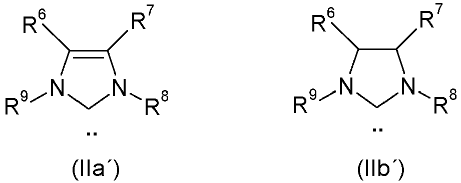

In a preferred embodiment of the catalysts of the general formula (I), R⁶ and R⁷ are each, independently of one another, hydrogen, C₆-C₂₄-aryl, particularly preferred phenyl, straight-chain or branched C₁-C₁₀-alkyl, particularly preferred propyl or butyl, or together with the carbon atoms to which they are bound form a C₆-C₁₀ cycloalkyl or C₆-C₁₀ aryl substituent, preferably a phenyl ring in structure (IIa) (structure (IIa') respectively) where all the above mentioned substituents may in turn be substituted by one or more further substituents selected from the group consisting of straight-chain or branched C₁-C₁₀-alkyl, C₁-C₁₀-alkoxy, C₆-C₂₄-aryl and a functional group selected from the group consisting of hydroxy, thiol, thioether, ketone, aldehyde, ester, ether, amine, imine, amide, nitro, carboxylic acid, disulphide, carbonate, isocyanate, carbodiimide, carboalkoxy, carbamate and halide.

In a preferred embodiment of the catalysts of the general formula (I), the substituents R⁸ and R⁹ are identical or different and are each straight-chain or branched C₁-C₁₀-alkyl, particularly preferably 1-propyl or neopentyl, C₃-C₁₀-cycloalkyl, preferably adamantyl, C₆-C₂₄-aryl, particularly preferably phenyl, C₁-C₁₀-alkylsulphonate, particularly preferably methanesulphonate, C₆-C₁₀-arylsulphonate, particularly preferably p-toluenesulphonate.

The abovementioned substituents as meanings of R⁸ and R⁹ may be substituted by one or more further substituents selected from the group consisting of straight-chain or branched C₁-C₅-alkyl, in particular methyl, C₁-C₅-alkoxy, aryl and a functional group selected from the group consisting of hydroxy, thiol, thioether, ketone, aldehyde, ester, ether, amine, imine, amide, nitro, carboxylic acid, disulphide, carbonate, isocyanate, carbodiimide, carboalkoxy, carbamate and halogen.

In particular, the substituents R⁸ and R⁹ can be identical or different and are each i-propyl, neopentyl, adamantyl, mesityl or 2,6-diisopropylphenyl.

Particularly preferred imidazoline/imidazolidine ligands have the following structures (III-a) to (III-o), where Ph is in each case a phenyl substituent, Bu is a butyl substituent and Mes is in each case a 2,4,6-trimethylphenyl substituent and (iPr)₂Ph is in all cases 2,6-diisopropylphenyl.

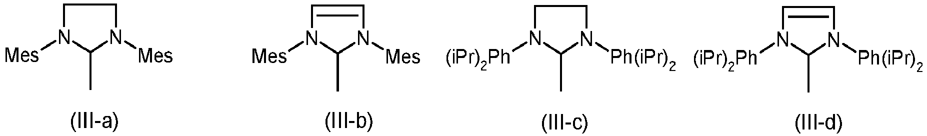

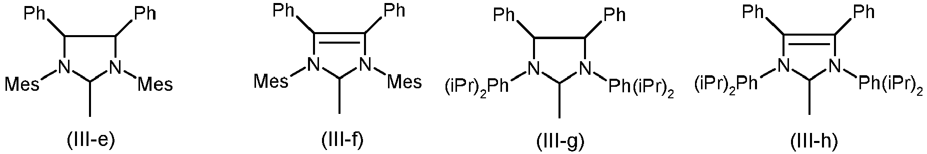

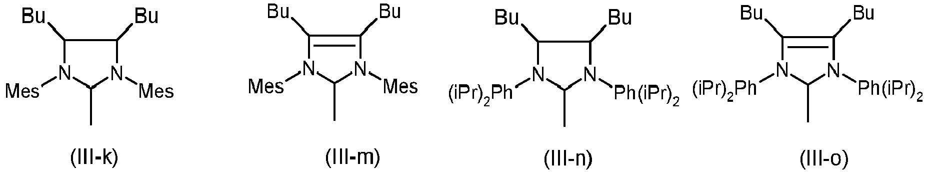

In **one embodiment** this invention relates to novel metal complexes according to formula (I) in which **m=1 and t=1,** such complexes then having the **general formula (I-a)** 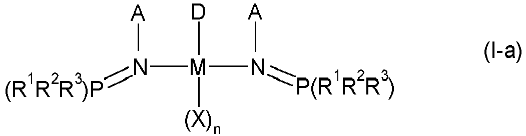 wherein X, n, A, D, R¹, R², and R³ may have all general, preferred, more preferred and most preferred meanings mentioned above. Such metal complexes of **general formula (I-a)** therefore comprise a bis(phosphinimine)-type ligand.

In a **further embodiment** this invention relates to metal complexes according to formula (I) in **which m=0 and t=1,** such complexes then having the **general formula (I-b)** 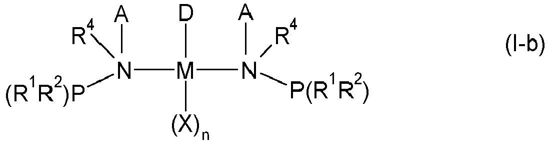 wherein X, n, A, D, R¹, R², and R⁴ may have all general, preferred, more preferred and most preferred meanings mentioned above.

In a **further embodiment** this invention relates to metal complexes of formula (I) in **which m=1 and t=0,** such complexes then having the **general formula (I-c)** 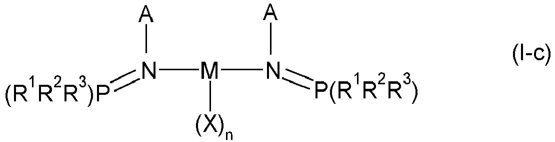 wherein X, n, A, D, R¹, R², and R³ may have all general, preferred, more preferred and most preferred meanings mentioned above.

In a **further embodiment** this invention relates to metal complexes according to formula (I) in **which m=0 and t=0,** such complexes then having the **general formula (I-d)** 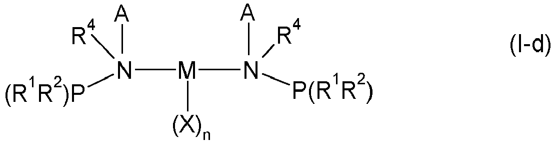 wherein X, n, A, D, R¹, R², and R⁴ may have all general, preferred, more preferred and most preferred meanings mentioned above.

A **preferred embodiment** of the invention relates to **novel metal complexes of general formula (I-a)** wherein
- **M**: is Sc, Y, Ti, Zr, Hf, V, Nb, Ta, Cr, Mo, W, Mn, Fe, Ru, Co or Nd, more preferably Cr, Mo, W, Fe, Ru, Co, or Nd and most preferably Cr, Fe, Co or Nd,
- **X**: are identical or different and represent halide, pseudohalide, alkyl, cycloalkyl, aryl, arylalkyl, alkoxy, aryloxy, alkyldiketonate, aryldiketonate, carboxylate, alkylsulfonate, arylsulfonate, alkylthiol, arylthiol, alkylsulfonyl or alkylsulfinyl groups, or amide,
- **n**: is 1,2 or 3,
- **R¹, R², R³**: are identical or different and represent H, alkyl, cycloalkyl, aryl, arylalkyl or heteroaryl, preferably H, branched or straight chain C₁-C₃₀-, more preferably C₁-C₂₀-alkyl; C₃-C₂₀-, more preferably C₅-C₈-cycloalkyl; C₆-C₂₄-, more preferably C₆-C₁₄ aryl; C₇-C₂₅-, more preferably C₇-C₁₅ arylalkyl; or C₆-C₂₄, more preferably C₆-C₁₄ heteroaryl, in which at least one carbon atom of the aromatic ring(s) is replaced by a heteroatom selected from nitrogen, oxygen and sulfur,
- **A**: are identical or different and represent H, alkyl, cycloalkyl, aryl, arylalkyl, or heteroaryl, preferably H, branched or straight chain C₁-C₃₀-alkyl, C₃-C₂₀-cycloalkyl, C₆-C₂₄ aryl, C₇-C₂₅ arylalkyl, or C₆-C₂₄ heteroaryl, in which at least one carbon atom of the aromatic ring(s) is replaced by a heteroatom selected from nitrogen, oxygen and sulfur, and more preferably H, branched or straight chain C₁-C₂₀-alkyl, C₅-C₈-cycloalkyl, C₆-C₁₄ aryl, C₇-C₁₅ arylalkyl, or C₆-C₁₄ heteroaryl, in which at least one carbon atom of the aromatic ring(s) is replaced by a heteroatom selected from nitrogen, oxygen and sulfur, and
- **D**: represents thiophene, furan, tetrahydrofuran, phosphine, sulfonated phosphine, phosphinimine, aminophosphine, phosphineoxide, phosphinesulfide, phosphineselenide, phosphate, phosphinite, phosphonite, phosphite, arsine, stibine, amine, amide, sulfoxide, sulfone, ether, carboxyl, nitrosyl, pyridine, thiol, thioether, selenoether, selenol, selenoxide or any other moiety able of acting as a 2 electron donor, comprising alkoxy, aryloxy, sulfone, alkyl, carbene, ketone, ester, pyridyl, substituted pyridyl, an imidazoline and imidazolidine ligand.

A **more preferred embodiment** of the invention relates to **novel metal complexes of general formula (I-a)** wherein
- **M**: is Cr, Fe, Co or Nd,
- **X**: are identical and represent halide,
- **n**: is 2 or 3,
- **R¹, R², R³**: are identical or different and represent H, branched or straight chain C₁-C₂₀-alkyl, C₅-C₈-cycloalkyl, C₆-C₁₄ aryl, C₇-C₁₅ arylalkyl, or C₆-C₁₄ heteroaryl, in which at least one carbon atom of the aromatic ring(s) is replaced by a heteroatom selected from nitrogen, oxygen and sulfur,
- **A**: are identical or different and represent H, alkyl, cycloalkyl, aryl, arylalkyl, or heteroaryl, preferably H, branched or straight chain C₁-C₃₀-alkyl, C₃-C₂₀-cycloalkyl, C₆-C₂₄ aryl, C₇-C₂₅ arylalkyl, or C₆-C₂₄ heteroaryl, in which at least one carbon atom of the aromatic ring(s) is replaced by a heteroatom selected from nitrogen, oxygen and sulfur, and more preferably H, branched or straight chain C₁-C₂₀-alkyl, C₅-C₈-cycloalkyl, C₆-C₁₄ aryl, C₇-C₁₅ arylalkyl, or C₆-C₁₄ heteroaryl, in which at least one carbon atom of the aromatic ring(s) is replaced by a heteroatom selected from nitrogen, oxygen and sulfur, and
- **D**: represents thiophene, furan, tetrahydrofuran, phosphine, sulfonated phosphine, phosphinimine, aminophosphine, phosphineoxide, phosphinesulfide, phosphineselenide, phosphate, phosphinite, phosphonite, phosphite, arsine, stibine, amine, amide, sulfoxide, sulfone, ether, carboxyl, nitrosyl, pyridine, thiol, thioether, selenoether, selenol, selenoxide or any other moiety able of acting as a 2 electron donor, comprising alkoxy, aryloxy, sulfone, alkyl, carbene, ketone, ester, pyridyl, substituted pyridyl, an imidazoline and imidazolidine ligand.

Another **preferred embodiment** of the invention relates to **novel metal complexes of general formula (I-a)** wherein
- **M**: is Sc, Y, Ti, Zr, Hf, V, Nb, Ta, Cr, Mo, W, Mn, Fe, Ru, Co or Nd, more preferably Cr, Mo, W, Fe, Ru, Co, or Nd and most preferably Cr, Fe, Co or Nd,
- **X**: are identical or different and represent halide, pseudohalide, alkyl, cycloalkyl, aryl, arylalkyl, alkoxy, aryloxy, alkyldiketonate, aryldiketonate, carboxylate, alkylsulfonate, arylsulfonate, alkylthiol, arylthiol, alkylsulfonyl or alkylsulfinyl groups, or amide,
- **n**: is 1, 2, or 3,
- **m**: is 1,
- **A**: are identical or different, **both divalent and linked to the ligand D,** and mean C₁-C₂₀ alkylene, C₅-C₂₀ cycloalkylene or 1,2-phenylene, more preferably methylene, ethylene or 1,2-phenylene,
- **D**: means -S-, -O-, -N(R⁵)-, -P(R⁵)-, -As(R⁵)-, arylene, heteroarylene, partially or fully saturated analogues of such arylene and heteroarylene moieties, more preferably 2,6-pyridinylene, 2,5-furanylene, 2,6-thiophenylene, and 2,5-imidazolylene, and
- **R¹, R², R³ and R⁵**: are identical or different and represent H, alkyl, cycloalkyl, aryl, alkylaryl, or heteroaryl, preferably H, branched or straight chain C₁-C₃₀-, more preferably C₁-C₂₀-alkyl; C₃-C₂₀-, more preferably C₅-C₈-cycloalkyl; C₆-C₂₄-, more preferably C₆-C₁₄ aryl; C₇-C₂₅-, more preferably C₇-C₁₅ arylalkyl; or C₆-C₂₄, more preferably C₆-C₁₄ heteroaryl, in which at least one carbon atom of the aromatic ring(s) is replaced by a heteroatom selected from nitrogen, oxygen and sulfur.

Such preferred metal complexes in which A are both a divalent group linked to D then have the **general structure (I-a1)** 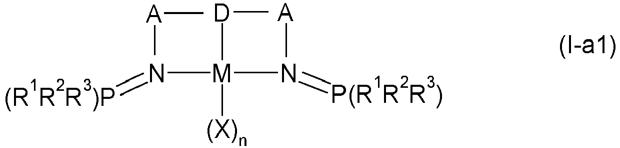 with M, X, n, A, D, R¹, R², and R³ having the same meanings as just outlined one paragraph above for this preferred embodiment.

In an even **more preferred embodiment** the invention relates to **novel metal complexes of general formula (I-a)** also **falling under the substructure (I-a1)** wherein
- **M**: is Sc, Y, Ti, Zr, Hf, V, Nb, Ta, Cr, Mo, W, Mn, Fe, Ru, Co or Nd, more preferably Cr, Mo, W, Fe, Ru, Co, or Nd and most preferably Cr, Fe, Co or Nd,
- **X**: are identical and represent halide, pseudohalide, alkyl, cycloalkyl, aryl, arylalkyl, alkoxy, aryloxy, alkyldiketonate, aryldiketonate, carboxylate, alkylsulfonate, arylsulfonate, alkylthiol, arylthiol, alkylsulfonyl or alkylsulfinyl groups, or amide,
- **n**: is 2 or 3,
- **A**: are identical or different and mean C₁-C₂₀ alkylene, C₅-C₂₀ cycloalkylene or 1,2-phenylene, more preferably methylene, ethylene or 1,2-phenylene,
- **D**: means -N(R⁵)-, -O-, or -S-, and
- **R¹, R², R³ and R⁵**: are identical or different and represent H, branched or straight chain C₁-C₂₀-alkyl, C₅-C₈-cycloalkyl, C₆-C₁₄ aryl, C₇-C₁₅ arylalkyl or C₆-C₁₄ heteroaryl.

In an **most preferred embodiment** the invention relates to **novel metal complexes of general formula (I-a)** also **falling under the substructure (I-a1)** wherein
- **M**: is Cr, Fe, Co or Nd,
- **X**: are identical and represent halide,
- **n**: is 2 or 3,
- **A**: are identical or different and mean C₁-C₂₀ alkylene, C₅-C₂₀ cycloalkylene or 1,2-phenylene, more preferably methylene, ethylene or 1,2-phenylene,
- **D**: means -N(R⁵)-, -O-, or -S-, and
- **R¹, R², R³ and R⁵**: are identical or different and represent H, branched or straight chain C₁-C₂₀-alkyl, C₅-C₈-cycloalkyl, C₆-C₁₄ aryl, C₇-C₁₅ arylalkyl or C₆-C₁₄ heteroaryl.

Another **preferred embodiment** of the invention relates to **novel metal complexes of general formula (I-b)** wherein
- **M**: is Sc, Y, Ti, Zr, Hf, V, Nb, Ta, Cr, Mo, W, Mn, Fe, Ru, Co or Nd, more preferably Cr, Mo, W, Fe, Ru, Co, or Nd and most preferably Cr, Fe, Co or Nd,
- **X**: are identical or different and mean halide, pseudohalide, alkyl, cycloalkyl, aryl, arylalkyl, alkoxy, aryloxy, alkyldiketonate, aryldiketonate, carboxylate, alkylsulfonate, arylsulfonate, alkylthiol, arylthiol, alkylsulfonyl or alkylsulfinyl groups, or amide,
- **n**: is 1, 2, or 3,
- **R¹, R², and R⁴**: are identical or different and represent H, alkyl, cycloalkyl, aryl, arylalkyl, or heteroaryl, preferably H, branched or straight chain C₁-C₃₀-, more preferably C₁-C₂₀-alkyl; C₃-C₂₀-, more preferably C₅-C₈-cycloalkyl; C₆-C₂₄-, more preferably C₆-C₁₄ aryl; C₇-C₂₅-, more preferably C₇-C₁₅ arylalkyl; or C₆-C₂₄, more preferably C₆-C₁₄ heteroaryl, in which at least one carbon atom of the aromatic ring(s) is replaced by a heteroatom selected from nitrogen, oxygen and sulfur,
- **A**: are identical or different and represent H, alkyl, cycloalkyl, aryl or heteroaryl, preferably H, branched or straight chain C₁-C₃₀-alkyl, C₃-C₂₀-cycloalkyl, C₆-C₂₄ aryl, C₇-C₂₅ arylalkyl, or C₆-C₂₄ heteroaryl, in which at least one carbon atom of the aromatic ring(s) is replaced by a heteroatom selected from nitrogen, oxygen and sulfur, and more preferably H, branched or straight chain C₁-C₂₀-alkyl, C₆-C₁₄ aryl, C₇-C₁₅ arylalkyl, or C₆-C₁₄ heteroaryl, in which at least one carbon atom of the aromatic ring(s) is replaced by a heteroatom selected from nitrogen, oxygen and sulfur, and
- **D**: represents thiophene, furan, tetrahydrofuran, phosphine, sulfonated phosphine, phosphinimine, aminophosphine, phosphineoxide, phosphinesulfide, phosphineselenide, phosphate, phosphinite, phosphonite, phosphite, arsine, stibine, amine, amide, sulfoxide, sulfone, ether, carboxyl, nitrosyl, pyridine, thiol, thioether, selenoether, selenol, selenoxide or any other moiety able of acting as a 2 electron donor such as alkoxy, aryloxy, sulfone, alkyl, carbene, ketone, ester, pyridyl, substituted pyridyl, an imidazoline or imidazolidine ligand.

Another **preferred embodiment** of the invention relates to **novel catalysts of general formula (I-b)** wherein
- **M**: is Sc, Y, Ti, Zr, Hf, V, Nb, Ta, Cr, Mo, W, Mn, Fe, Ru, Co or Nd, more preferably Cr, Mo, W, Fe, Ru, Co, or Nd and most preferably Cr, Fe, Co or Nd,
- **X**: are identical or different and represent halide, pseudohalide, alkyl, cycloalkyl, aryl, arylalkyl, alkoxy, aryloxy, alkyldiketonate, aryldiketonate, carboxylate, alkylsulphonate, arylsulphonate, alkylthiol, arylthiol, alkylsulphonyl or alkylsulphinyl groups, or amide,
- **n**: is 1,2, or 3,
- **A**: are identical or different, **both divalent and linked to the ligand D,** and mean C₁-C₂₀ alkylene, C₅-C₂₀ cycloalkylene or 1,2-phenylene, more preferably methylene, ethylene or 1,2-phenylene,
- **D**: means -S-, -O-, -N(R⁵)-, -P(R⁵)-, -As(R⁵)-, arylene, heteroarylene, partially or fully saturated analogues of such arylene and heteroarylene moieties, more preferably 2,6-pyridinylene, 2,5-furanylene, 2,5-thiophenylene, and 2,5-imidazolylene, and
- **R¹, R², R⁴** and **R⁵**: are identical or different and represent H, alkyl, cycloalkyl, aryl, arylalkyl, or heteroaryl, preferably H, branched or straight chain C₁-C₃₀-, more preferably C₁-C₂₀-alkyl; C₃-C₂₀-, more preferably C₅-C₈-cycloalkyl; C₆-C₂₄-, more preferably C₆-C₁₄ aryl; C₇-C₂₅-, more preferably C₇-C₁₅ arylalkyl; or C₆-C₂₄, more preferably C₆-C₁₄ heteroaryl, in which at least one carbon atom of the aromatic ring(s) is replaced by a heteroatom selected from nitrogen, oxygen and sulfur.

Such preferred catalysts in which A are both a divalent group linked to D then have the **general structure (I-b1)** 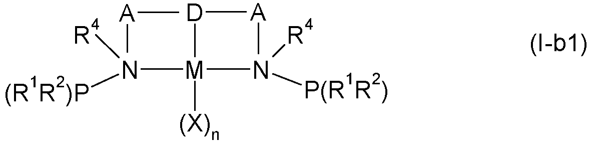 with M, X, n, A, D, R¹, R², and R⁴ having the same meanings as just outlined one paragraph above for this preferred embodiment

In an even **more preferred embodiment** the invention relates to **novel catalysts of general formula (I-b) falling under the substructure (I-b1)** wherein
- **M**: is Sc, Y, Ti, Zr, Hf, V, Nb, Ta, Cr, Mo, W, Mn, Fe, Ru, Co or Nd, more preferably Cr, Mo, W, Fe, Ru, Co, or Nd and most preferably Cr, Fe, Co or Nd,
- **X**: is a halide, pseudohalide, alkyl, cycloalkyl, aryl, arylalkyl, alkoxy, aryloxy, alkyldiketonate, aryldiketonate, carboxylate, alkylsulphonate, arylsulphonate, alkylthiol, arylthiol, alkylsulphonyl or alkylsulphinyl groups, or an amide,
- **n**: is 2 or 3,
- **A**: are identical or different and mean a divalent organic group, preferably C₁-C₂₀ alkylene, C₅-C₂₀ cycloalkylene or 1,2-phenylene, more preferably methylene, ethylene or 1,2-phenylene.
- **D**: means -N(R⁵)-, -O-, or -S-, and
- **R¹, R², R⁴** and **R⁵**: are identical or different and represent H, branched or straight chain C₁-C₂₀-alkyl, C₅-C₈-cycloalkyl, C₆-C₁₄ aryl or C₆-C₁₄ heteroaryl.

In another **preferred embodiment** the invention relates to **novel metal complexes of general formula (I-c)** wherein
- **M**: is Sc, Y, Ti, Zr, Hf, V, Nb, Ta, Cr, Mo, W, Mn, Fe, Ru, Co or Nd, more preferably Cr, Mo, W, Fe, Ru, Co, or Nd and most preferably Cr, Fe, Co or Nd,
- **X**: are identical or different and represent halide, pseudohalide, alkyl, cycloalkyl, aryl, arylalkyl, alkoxy, aryloxy, alkyldiketonate, aryldiketonate, carboxylate, alkylsulfonate, arylsulfonate, alkylthiol, arylthiol, alkylsulfonyl or alkylsulfinyl groups, or amide,
- **n**: is 1,2 or 3,
- **R¹, R², R³**: are identical or different and represent H, alkyl, cycloalkyl, aryl, arylalkyl, or heteroaryl, preferably H, branched or straight chain C₁-C₃₀-, more preferably C₁-C₂₀-alkyl; C₃-C₂₀-, more preferably C₅-C₈-cycloalkyl; C₆-C₂₄-, more preferably C₆-C₁₄ aryl; C₇-C₂₅-, more preferably C₇-C₁₅ arylalkyl; or C₆-C₂₄, more preferably C₆-C₁₄ heteroaryl, in which at least one carbon atom of the aromatic ring(s) is replaced by a heteroatom selected from nitrogen, oxygen and sulfur, and
- **A**: are identical or different and represent H, alkyl, cycloalkyl, aryl, arylalkyl, or heteroaryl, preferably H, branched or straight chain C₁-C₃₀-alkyl, C₃-C₂₀-cycloalkyl, C₆-C₂₄ aryl, C₇-C₂₅ arylalkyl, or C₆-C₂₄ heteroaryl, in which at least one carbon atom of the aromatic ring(s) is replaced by a heteroatom selected from nitrogen, oxygen and sulfur, and more preferably H, branched or straight chain C₁-C₂₀-alkyl, C₅-C₈-cycloalkyl, C₆-C₁₄ aryl, C₇-C₁₅ arylalkyl or C₆-C₁₄ heteroaryl, in which at least one carbon atom of the aromatic ring(s) is replaced by a heteroatom selected from nitrogen, oxygen and sulfur.

In a particularly **preferred embodiment** the invention relates to **novel metal complexes of general formula (I-c)** wherein
- **M**: Cr, Fe, Co or Nd,
- **X**: are identical and represent halide,
- **n**: is 2 or 3,
- **R¹, R², and R³**: are identical or different and represent H, branched or straight chain C₁-C₂₀-alkyl, C₅-C₈-cycloalkyl, C₆-C₁₄ aryl, C₇-C₁₅ arylalkyl, or C₆-C₁₄ heteroaryl, in which at least one carbon atom of the aromatic ring(s) is replaced by a heteroatom selected from nitrogen, oxygen and sulfur, and
- **A**: are identical or different and represent H, alkyl, cycloalkyl, aryl, arylalkyl, arylalkyl, or heteroaryl, preferably H, branched or straight chain C₁-C₃₀-alky 1, C₃-C₂₀-cycloalkyl, C₆-C₂₄ aryl, C₇-C₂₅ arylalkyl, or C₆-C₂₄ heteroaryl, in which at least one carbon atom of the aromatic ring(s) is replaced by a heteroatom selected from nitrogen, oxygen and sulfur, and more preferably H, branched or straight chain C₁-C₂₀-alkyl, C₅-C₈-cycloalkyl, C₆-C₁₄ aryl, C₇-C₁₅ arylalkyl, or C₆-C₁₄ heteroaryl, in which at least one carbon atom of the aromatic ring(s) is replaced by a heteroatom selected from nitrogen, oxygen and sulfur.

In another **embodiment** the invention relates to **novel metal complexes of general formula (I-d)** wherein
- **M**: is Sc, Y, Ti, Zr, Hf, V, Nb, Ta, Cr, Mo, W, Mn, Fe, Ru, Co or Nd, more preferably Cr, Mo, W, Fe, Ru, Co, or Nd and most preferably Cr, Fe, Co or Nd,
- **X**: are identical or different and mean halide, pseudohalide, alkyl, cycloalkyl, aryl, arylalkyl, alkoxy, aryloxy, alkyldiketonate, aryldiketonate, carboxylate, alkylsulfonate, arylsulfonate, alkylthiol, arylthiol, alkylsulfonyl or alkylsulfinyl groups, or amide,
- **n**: is 1, 2, or 3,
- **R¹, R², and R⁴**: are identical or different and represent H, alkyl, cycloalkyl, aryl, arylalkyl, or heteroaryl, preferably H, branched or straight chain C₁-C₃₀-, more preferably C₁-C₂₀-alkyl; C₃-C₂₀-, more preferably C₅-C₈-cycloalkyl; C₆-C₂₄-, more preferably C₆-C₁₄ aryl; C₇-C₂₅-, more preferably C₇-C₁₅ arylalkyl; or C₆-C₂₄, more preferably C₆-C₁₄ heteroaryl, in which at least one carbon atom of the aromatic ring(s) is replaced by a heteroatom selected from nitrogen, oxygen and sulfur,
- **A**: are identical or different and represent H, alkyl, cycloalkyl, aryl or heteroaryl, preferably H, branched or straight chain C₁-C₃₀-alkyl, C₃-C₂₀-cycloalkyl, C₆-C₂₄ aryl, C₇-C₂₅ arylalkyl, or C₆-C₂₄ heteroaryl, in which at least one carbon atom of the aromatic ring(s) is replaced by a heteroatom selected from nitrogen, oxygen and sulfur, and more preferably H, branched or straight chain C₁-C₂₀-alkyl, C₆-C₁₄ aryl, C₇-C₁₅ arylalkyl, or C₆-C₁₄ heteroaryl, in which at least one carbon atom of the aromatic ring(s) is replaced by a heteroatom selected from nitrogen, oxygen and sulfur.

In another **preferred embodiment** the invention relates to **novel metal complexes of general formula (I-d)** wherein
- **M**: Cr, Fe, Co or Nd,
- **X**: are identical mean halide,
- **n**: is 2, or 3,
- **R¹, R², and R⁴**: are identical or different and represent H, alkyl, cycloalkyl, aryl, arylalkyl, or heteroaryl, preferably H, branched or straight chain C₁-C₃₀-, more preferably C₁-C₂₀-alkyl; C₃-C₂₀-, more preferably C₅-C₈-cycloalkyl; C₆-C₂₄-, more preferably C₆-C₁₄ aryl; C₇-C₂₅-, more preferably C₇-C₁₅ arylalkyl; or C₆-C₂₄, more preferably C₆-C₁₄ heteroaryl, in which at least one carbon atom of the aromatic ring(s) is replaced by a heteroatom selected from nitrogen, oxygen and sulfur, and
- **A**: are identical or different and represent H, alkyl, cycloalkyl, aryl or heteroaryl, preferably H, branched or straight chain C₁-C₃₀-alkyl, C₃-C₂₀-cycloalkyl, C₆-C₂₄ aryl, C₇-C₂₅ arylalkyl, or C₆-C₂₄ heteroaryl, in which at least one carbon atom of the aromatic ring(s) is replaced by a heteroatom selected from nitrogen, oxygen and sulfur, and more preferably H, branched or straight chain C₁-C₂₀-alkyl, C₆-C₁₄ aryl, C₇-C₁₅ arylalkyl, or C₆-C₁₄ heteroaryl, in which at least one carbon atom of the aromatic ring(s) is replaced by a heteroatom selected from nitrogen, oxygen and sulfur.

In order to prepare the metal complexes according to general formula (I) and all preferred, more preferred and most preferred embodiments thereof a person skilled in the art can use a multistep procedure as described in the experimental section of this application for various catalysts and can apply, generalize and modify to the extent necessary such described procedures to prepare a broad variety of metal complexes falling under general formula (I):

In a particulary preferred embodiment the catalyst in accordance with general formula (I) is selected from the group consisting of the catalysts (13) to (39)

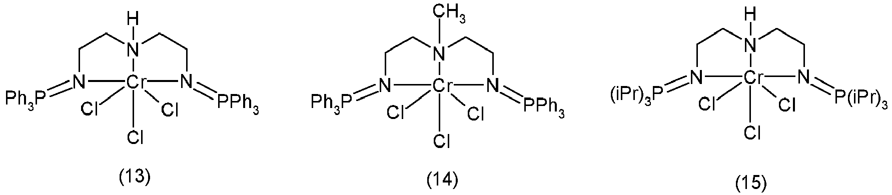

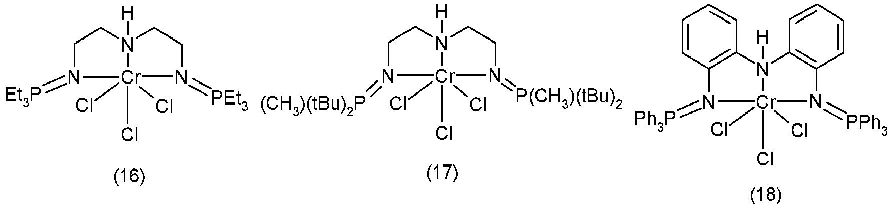

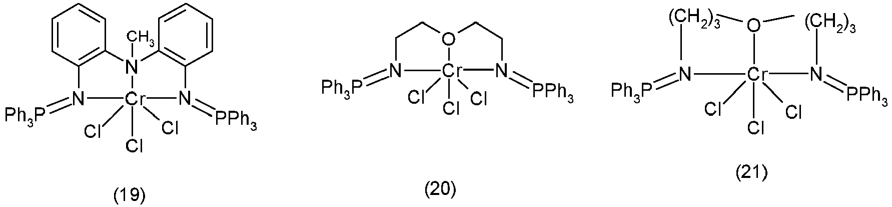

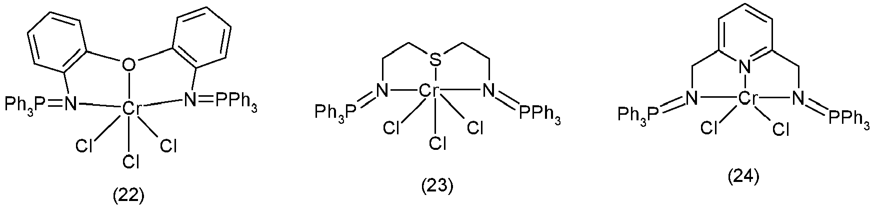

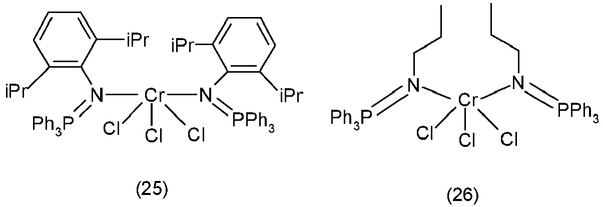

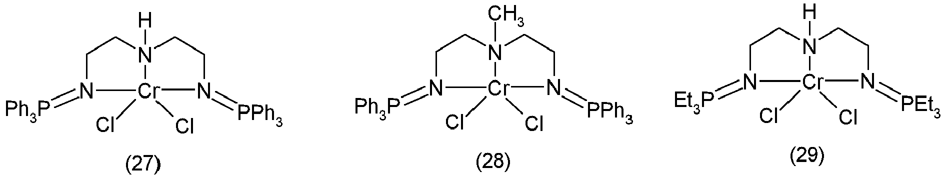

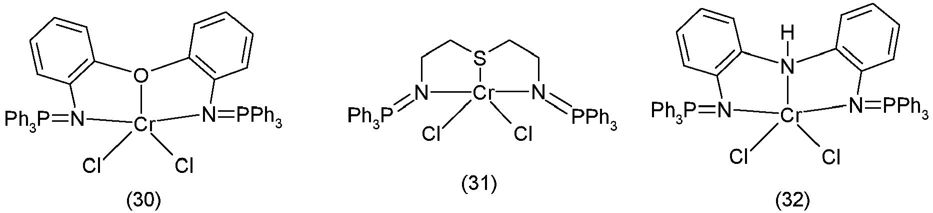

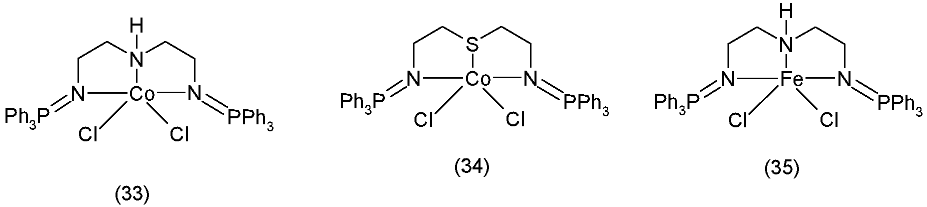

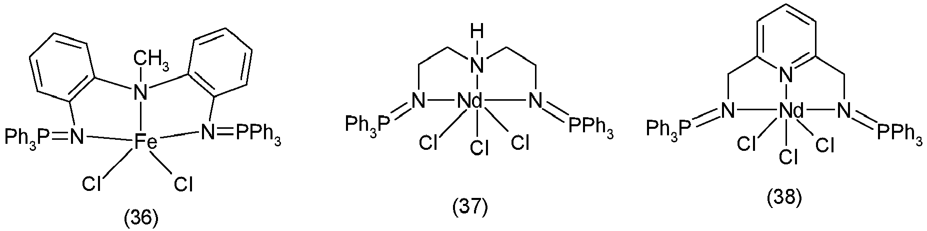

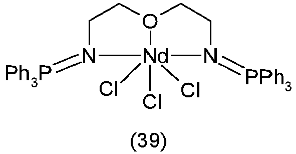

### DESCRIPTION OF THE POLYMERIZATION REACTION:

In the polymerization process of the present invention at least one diene and optionally one or more 1-olefins are used to prepare the respective homo- or copolymers.

### Diene monomer:

Dienes employed in the polymerization process of the present invention preferably have the general formula (IV) are used,

R^{a}R^{b}C=CR^{c}CR^{d}=CR^{e}R^{f} (IV)

wherein R^{a} to R^{f} are independently selected from hydrogen, halogen, alkyl, cycloalkyl, aryl, araalkyl and alkaryl. Preferably R^{a} to R^{f} can be independently of one another chloro, methyl, ethyl, n-propyl, isopropyl, or single or mixtures of isomeric forms of pentyl, hexyl octyl, decyl; or aryl groups selected from phenyl, 2-chloro-phenyl, o-biphenyl, naphtyl, phenantryl and anthryl; or alkaryl groups selected from phenylmethyl, phenylethyl, phenyl-n-propyl, and naphtylmethyl; or aralkyl groups selected from tolyl, xylyl, mesityl and 2-methylnaphtyl. However, when the diene is too heavily substituted by bulky groups it may be difficult or impossible to cause the diene to polymerise due to steric hindrance. The diene employed preferably has the general formula RH-C=CR^{d}-CH=CH₂ wherein R^{a} and R^{d} are independently selected from hydrogen, chlorine and a C₁ to C₁₀ hydrocarbyl group. Preferred dienes are 1,3-butadiene, 2-methyl-1,3-butadiene (isoprene), and 2-chloro-1,3-butadiene (chloroprene).

### Other copolymerizable monomers:

In another embodiment the inventive metal complexes are suited to catalyze the copolymerization of a conjugated diene with one or more further copolymerizable monomers.

As copolymerizable monomers **α,β-unsaturated nitrile** can be used. It is possible to use any known α,β-unsaturated nitrile, preference being given to (C₃-C₅) α,β-unsaturated nitriles such as acrylonitrile, methacrylonitrile, ethacrylonitrile or mixtures thereof. Acrylonitrile is particularly preferred.

One particularly preferred copolymer to be synthesized pursuant to the present invention is a copolymer of acrylonitrile and 1,3-butadiene.

As further copolymerizable co-/termonomers it is possible to make use, for example, of aromatic vinylmonomers, preferably styrene, α-methylstyrene and vinylpyridine, **fluorine-containing vinylmonomers,** preferably fluoroethyl vinyl ether, fluoropropyl vinyl ether, o-fluoromethylstyrene, vinyl pentafluorobenzoate, difluoroethylene and tetrafluoroethylene, or else **copolymerizable anti-ageing monomers,** preferably N-(4-anilinophenyl)acrylamide, N-(4-anilinophenyl)methacrylamide, N-(4-anilinophenyl)cinnamides, N-(4-anilinophenyl)crotonamide, N-phenyl-4-(3-vinylbenzyloxy)aniline and N-phenyl-4-(4-vinylbenzyloxy)aniline, and also **non-conjugated dienes,** such as 4-cyanocyclohexene and 4-vinylcyclohexene, or else **alkynes,** such as 1- or 2-butyne.

Alternatively, as further copolymerizable co-/termonomers, it is possible to use copolymerizable termonomers containing carboxyl groups, examples being α,β-unsaturated monocarboxylic acids, their esters, a,β-unsaturated dicarboxylic acids, their monoesters or diesters, or their corresponding anhydrides or amides.

As **α,β-unsaturated monocarboxylic acids** it is possible with preference to use acrylic acid and methacrylic acid.

It is also possible to employ **esters of the α,β-unsaturated monocarboxylic acids,** preferably their alkyl esters and alkoxyalkyl esters. Preference is given to the alkyl esters, especially C₁-C₁₈ alkyl esters, of the α,β-unsaturated monocarboxylic acids, Particular preference is given to alkyl esters, especially C₁-C₁₈ alkyl esters, of acrylic acid or of methacrylic acid, more particularly methyl acrylate, ethyl acrylate, propyl acrylate, n-butyl acrylate, tert-butyl acrylate, 2-ethylhexyl acrylate, n-dodecyl acrylate, methyl methacrylate, ethyl methacrylates, butyl methacrylate and 2-ethylhexyl methacrylate. Also preferred are alkoxyalkyl esters of the α,β-unsaturated monocarboxylic acids, more preferably alkoxyalkyl esters of acrylic acid or of methacrylic acid, more particular C₂-C₁₂ alkoxyalkyl esters of acrylic acid or of methacrylic acid, very preferably methoxymethyl acrylate, methoxyethyl (meth)acrylate, ethoxyethyl (meth)acrylate and methoxyethyl (meth)acrylate. Use may also be made of mixtures of alkyl esters, such as those mentioned above, for example, with alkoxyalkyl esters, in the form of those mentioned above, for example. Use may also be made of cyanoalkyl acrylate and cyanoalkyl methacrylates in which the C atom number of the cyanoalkyl group is 2-12, preferably α-cyanoethyl acrylate, β-cyanoethyl acrylate and cyanobutyl methacrylate. Use may also be made of hydroxyalkyl acrylates and hydroxyalkyl methacrylate in which the C atom number of the hydroxyalkyl groups is 1-12, preferably 2-hydroxyethyl acrylate, 2-hydroxyethyl methacrylate and 3-hydroxypropyl acrylate; use may also be made of fluorine-substituted benzyl-group-containing acrylates or methacrylates, preferably fluorobenzyl acrylate, and fluorobenzyl methacrylate. Use may also be made of acrylates and methacrylates containing fluoroalkyl groups, preferably trifluoroethyl acrylate and tetrafluoropropyl methacrylate. Use may also be made of a,β-unsaturated carboxylic esters containing amino groups, such as dimethylaminomethyl acrylate and diethylaminoethyl acrylate.

As other copolymerizable monomers it is possible, furthermore, to use **α,β-unsaturated dicarboxylic acids,** preferably maleic acid, fumaric acid, crotonic acid, itaconic acid, citraconic acid and mesaconic acid.

Use may be made, furthermore, of **α,β-unsaturated dicarboxylic anhydrides,** preferably maleic anhydride, itaconic anhydride, citraconic anhydride and mesaconic anhydride.

It is possible, furthermore, to use **monoesters or diesters of α,β-unsaturated dicarboxylic acids.**

These α,β-unsaturated dicarboxylic monoesters or diesters may be, for example, **alkyl esters,** preferably C₁-C₁₀ alkyl, more particularly ethyl, n-propyl, isopropyl, n-butyl, tert-butyl, n-pentyl or n-hexyl esters, **alkoxyalkyl esters,** preferably C₂-C₁₂ alkoxyalkyl, more preferably C₃-C₈- alkoxyalkyl, **hydroxyalkyl,** preferably C₁-C₁₂ hydroxyalkyl, more preferably C₂-C₈ hydroxyalkyl, **cycloalkyl esters,** preferably C₅-C₁₂ cycloalkyl, more preferably C₆-C₁₂ cycloalkyl, **alkylcycloalkyl esters,** preferably C₆-C₁₂ alkylcycloalkyl, more preferably C₇-C₁₀ alkylcycloalkyl, aryl esters, preferably C₆-C₁₄ aryl esters, these esters being monoesters or diesters, and it also being possible, in the case of the diesters, for the esters to be mixed esters.

Particularly preferred **alkyl esters of α,β-unsaturated monocarboxylic acids** are methyl (meth)acrylate, ethyl (meth)acrylate, propyl (meth)acrylate, n-butyl (meth)acrylate, t-butyl (meth)acrylate, hexyl (meth)acrylate, 2-ethylhexyl (meth)acrylate, octyl (meth)acrylate, 2-propylheptyl acrylate and lauryl (meth)acrylate. More particularly, n-butyl acrylate is used.

Particularly preferred **alkoxyalkyl esters of the α,β-unsaturated monocarboxylic acids** are methoxyethyl (meth)acrylate, ethoxyethyl (meth)acrylate and methoxyethyl (meth)acrylate. More particularly, methoxyethyl acrylate is used.

Particularly preferred **hydroxyalkyl esters of the α,β-unsaturated monocarboxylic acids** are hydroxyethyl (meth)acrylate, hydroxypropyl (meth)acrylate and hydroxybutyl (meth)acrylate.

Other esters of the a,β-unsaturated monocarboxylic acids that are used are additionally, for example, polyethylene glycol (meth)acrylate, polypropylene glycol (meth)acrylate, glycidyl (meth)acrylate, epoxy (meth)acrylate, N-(2-hydroxyethyl)acrylamides, N-(2-hydroxymethyl)acrylamides and urethane (meth)acrylate.

Examples of **α,β-unsaturated dicarboxylic monoesters** encompass
● maleic acid monoalkyl esters, preferably monomethyl maleate, monoethyl maleate, monopropyl maleate and mono-n-butyl maleate;
● maleic acid monocycloalkyl esters, preferably monocyclopentyl maleate, monocyclohexyl maleate and monocycloheptyl maleate;
● maleic acid monoalkyl cycloalkyl esters, preferably monomethyl cyclopentyl maleate and monoethyl cyclohexyl maleate;
● maleic acid monoaryl esters, preferably monophenyl maleate;
● maleic acid monobenzyl esters, preferably monobenzyl maleate;
● fumaric acid monoalkyl esters, preferably monomethyl fumarate, monoethyl fumarate, monopropyl fumarate and mono-n-butyl fumarate;
● fumaric acid monocycloalkyl esters, preferably monocyclopentyl fumarate, monocyclohexyl fumarate and monocycloheptyl fumarate;
● fumaric acid monoalkyl cycloalkyl esters, preferably monomethyl cyclopentyl fumarate and monoethyl cyclohexyl fumarate;
● fumaric acid monoaryl esters, preferably monophenyl fumarate;
● fumaric acid monobenzyl esters, preferably monobenzyl fumarate;
● citraconic acid monoalkyl esters, preferably monomethyl citraconate, monoethyl citraconate, monopropyl citraconate and mono-n-butyl citraconate;
● citraconic acid monocycloalkyl esters, preferably monocyclopentyl citraconate, monocyclohexyl citraconate and monocycloheptyl citraconate;
● citraconic acid monoalkyl cycloalkyl esters, preferably monomethyl cyclopentyl citraconate and monoethyl cyclohexyl citraconate;
● citraconic acid monoaryl esters, preferably monophenyl citraconate;
● citraconic acid monobenzyl esters, preferably monobenzyl citraconate;
● itaconic acid monoalkyl esters, preferably monomethyl itaconate, monoethyl itaconate, monopropyl itaconate and mono-n-butyl itaconate;
● itaconic acid monocycloalkyl esters, preferably monocyclopentyl itaconate, monocyclohexyl itaconate and monocycloheptyl itaconate;
● itaconic acid monoalkyl cycloalkyl esters, preferably monomethyl cyclopentyl itaconate and monoethyl cyclohexyl itaconate;
● itaconic acid monoaryl esters, preferably monophenyl itaconate;
● itaconic acid monobenzyl esters, preferably monobenzyl itaconate.
● Mesaconic acid monoalkyl esters, preferably mesaconic acid monoethyl esters;

As **α,β-unsaturated dicarboxylic diesters** it is possible to use the analogous diesters based on the abovementioned monoester groups, and the ester groups may also be chemically different groups.

The process according to the present invention allows in particular the preparation of co- and/or terpolymers in which the proportions of conjugated diene and α,β-unsaturated nitrile in the resultant diene/nitrile copolymers may vary within wide ranges. The proportion of or the sum of the conjugated dienes is typically in the range from 40 to 90% preferably in the range from 50 to 85%, by weight, based on the overall polymer. The proportion of or the sum of the α,β-unsaturated nitriles is typically 10 to 60%, preferably 15 to 50%, by weight, based on the overall polymer. The proportions of the monomers add up in each case to 100% by weight. The additional monomers, depending on the nature of the termonomer or termonomers, may be present in amounts of 0% to 40% by weight, based on the overall polymer. In this case, corresponding proportions of the conjugated diene or dienes and/or of the α,β-unsaturated nitrile or nitriles are replaced by the proportions of the additional monomers, with the proportions of all the monomers adding up in each case to 100% by weight.

Where the termonomers are monomers of the kind that form tertiary radicals (e.g. methacrylic acid), it has been found appropriate to use them in amounts of 0% to 10% by weight.

It should be noted that the limitation given above for the additional monomers, to a maximum of 40%, applies only in the scenario where the total amount of monomers is metered in to the polymerization batch at the beginning or during the reaction (in other words in order to produce random terpolymer systems). It is of course possible, owing to the fact that a nitrile rubber has fragments of the regulator or regulators used in its main polymer chain and/or its end groups, for it to be employed as a macro-regulator and to be employed in any desired amount, by reaction with suitable monomers for the purpose, for example, of generating block systems.

### Alkylating agents serving as activator:

Besides the novel metal complexes according to general formula (I) an alkylating agent can optionally be used as further component typically serving as an activator. Preferably at least one alkylating agent is used in the process of the present invention. Alkylating agents, which may also be referred to as hydrocarbylating agents, are organometallic compounds that can transfer hydrocarbyl groups to another metal. Typically, these agents are organometallic compounds of electropositive metals such as Groups 1, 2, and 13 metals (Groups IA, IIA, and IIIA metals). In one embodiment, the organometallic compound is chosen from **organolithium, organoaluminum, organozinc and organomagnesium compounds.** In certain embodiments, such alkylating agents are soluble in hydrocarbon solvents.

The **organoaluminum compounds** typically refer to any compound containing at least on aluminum-carbon bond. The organoaluminum compounds include those represented by the formula AIRₙX₃₋ₙ, wherein each R, which may be the same or different, is a monovalent organic group that is attached to the aluminium atom via a carbon atom, wherein each X, which may be the same or different, is a hydrogen atom, a halogen atom, a carboxylate group, an alkoxide group, or an aryloxide group, and where n is a number from 1 to 3. Each R may be a hydrocarbyl group such as, but not limited to, alkyl, cycloalkyl, substituted cycloalkyl, alkenyl, cycloalkenyl, substituted cycloalkenyl, aryl, substituted aryl, aralkyl, alkaryl, allyl, and alkynyl groups. These hydrocarbyl groups may contain one or more heteroatoms such as, but not limited to, nitrogen, oxygen, boron, silicon, sulphur, tin, and phosphorus atoms. The number n may include fractional numbers, such as when the organoaluminum compounds comprises, for example but not limited to, aluminum sesquihalides.

Preferred organoaluminum compounds include, but are not limited to, trihydrocarbylaluminum, dihydrocarbylaluminum hydride, hydrocarbylaluminum dihydride, dihydrocarbylaluminum carboxylate, hydrocarbylaluminum bis(carboxylate), dihydrocarbylaluminum alkoxide, hydrocarbylaluminum dialkoxide, dihydrocarbylaluminum halide, hydrocarbylaluminum dihalide, dihydrocarbylaluminum aryloxide, and hydrocarbylaluminum diaryloxide compounds.

Trihydrocarbylaluminum compounds include trimethylaluminum, triethylaluminum, triisobutylaluminum, tri-n-propylaluminum, triisopropylaluminum, tri-n-butylaluminum, tri-t-butylaluminum, tri-n-pentylaluminum, trineopentylaluminum, tri-n-hexylaluminum, tri-n-octylaluminum, tris(2-ethylhexyl)aluminum, tricyclohexylaluminum, tris(1-methylcyclopentyl)aluminum, triphenylaluminum, tri-p-tolylaluminum, tris(2,6-dimethylphenyl)aluminum, tribenzylaluminum, diethylphenylaluminum, diethyl-p-tolylaluminum, diethylbenzylaluminum, ethyldiphenylaluminim, ethyldi-p-tolylaluminum, and ethyldibenzylaluminum.

Dihydrocarbylaluminum hydride compounds include diethylaluminum hydride, di-n-propylaluminum hydride, diisopropylaluminum hydride, di-n-butylaluminum hydride, diisobutylaluminum hydride, din-octylaluminum hydride, diphenylaluminum hydride, di-p-tolylaluminum hydride, dibenzylaluminum hydride, phenylethylaluminum hydride, phenyl-n-propylaluminum hydride, phenylisopropylaluminum hydride, phenyl-n-butylaluminum hydride, phenylisobutylaluminum hydride, pheny-n-octylaluminum hydride, p-tolylethylaluminum hydride, p-tolyl-n-propylaluminum hydride, p-tolylisopropylaluminum hydride, p-tolyl-n-butylaluminum hydride, p-tolylisobutylaluminum hydride, p-tolyl-n-octylaluminum hydride, benzylethylaluminum hydride, benzyl-n-propylaluminum hydride, benzylisopropylaluminum hydride, benzyl-n-butylaluminum hydride, benzylisobutylaluminum hydride, and benzyl-n-octylaluminum hydride.

Hydrocarbylaluminum dihydrides include ethylaluminum dihydride, n-propylaluminum dihydride, isopropylaluminum dihydride, n-butylaluminum dihydride, isobutylaluminum dihydride, and n-octylaluminum dihydride.

Dihydrocarbylaluminum chloride compounds include diethylaluminum chloride, di-n-propylaluminum chloride, diisopropylaluminum chloride, di-n-butylaluminum chloride, diisobutylaluminum chloride, di-n-octylaluminum chloride, diphenylaluminum chloride, di-p-tolylaluminum chloride, dibenzylaluminum chloride, phenylethylaluminum chloride, phenyl-n-propylaluminum chloride, phenylisopropylaluminum chloride, phenyl-n-butylaluminum chloride, phenylisobutylaluminum chloride, phenyl-n-octylaluminum chloride, p-tolylethylaluminum chloride, p-tolyl-n-propylaluminum chloride, p-tolylisopropylaluminum chloride, p-tolyl-n-butylaluminum chloride, p-tolylisobutylaluminum chloride, p-tolyl-n-octylaluminum chloride, benzylethylaluminum chloride, benzyl-n-propylaluminum chloride, benzylisopropylaluminum chloride, benzyl-n-butylaluminum chloride, benzylisobutylaluminum chloride, and benzyl-n-octylaluminum chloride.

Hydrocarbylaluminum dichlorides include ethylaluminum dichloride, n-propylaluminum dichloride, isopropylaluminum dichloride, n-butylaluminum dichloride, isobutylaluminum dichloride, and n-octylaluminum dichloride.

Other organoaluminum compounds include dimethylaluminum hexanoate, diethylaluminum octoate, diisobutylaluminum 2-ethylhexanoate, dimethylaluminum neodecanoate, diethylaluminum stearate, diisobutylaluminum oleate, methylaluminum bis(hexanoate), ethylaluminum bis(octoate), isobutylaluminum bis(2-ethylhexanoate), methylaluminum bis(neodecanoate), ethylaluminum bis(stearate), isobutylaluminum bis(oleate), dimethylaluminum methoxide, diethylaluminum methoxide, diisobutylaluminum methoxide, dimethylaluminum ethoxide, diethylaluminum ethoxide, diisobutylaluminum ethoxide, dimethylaluminum phenoxide, diethylaluminum phenoxide, diisobutylaluminum phenoxide, methylaluminum dimethoxide, ethylaluminum dimethoxide, isobutylaluminum dimethoxide, methylaluminum diethoxide, ethylaluminum diethoxide, isobutylaluminum diethoxide, methylaluminum diphenoxide, ethylaluminum diphenoxide, isobutylaluminum diphenoxide, and mixtures thereof.

Another class of organoaluminum compounds includes aluminoxanes. Aluminoxanes include oligomeric linear aluminoxanes that can be represented by the general formula (A-1) and oligomeric cyclic aluminosiloxanes that can be represented by the general formula (A-2), 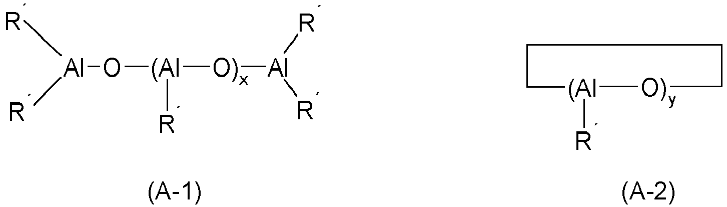 wherein x is an integer in the range of 1 to 100, preferably 10 to 50, y is an integer in the range of 2 to 100, preferably 3 to 20 and each R¹, which may be the same or different, is a monovalent organic group that is attached to the aluminium atom via a carbon atom. Typically each R¹ is a hydrocarbyl group such as, but not limited to alkyl, cycloalkyl, substituted cycloalkyl, alkenyl, cycloalkenyl, substituted cycloalkenyl, aryl, substituted aryl, aralkyl, alkaryl, allyl, and alkynyl groups. These hydrocarbyl groups may contain one or more heteroatoms such as, but not limited to, nitrogen, oxygen, boron, silicon, sulphur, tin, and phosphorus atoms. It should be noted that the number of moles of the aluminoxane as used in the process of the present invention refers to the number of moles of the aluminum atoms rather than the number of moles of the oligomeric aluminoxane molecules. This convention is commonly employed in the art of catalysis utilizing aluminoxanes.

Aluminoxanes can be prepared by reacting trihydrocarbylaluminum compounds with water. This reaction can be performed according to known methods, such as (1) a method in which the trihydrocarbylaluminum compound may be dissolved in an organic solvent and then contacted with water, (2) a method in which the trihydrocarbylaluminum compound may be reacted with water of crystallization contained in, for example, metal salts, or water adsorbed in inorganic or organic compounds, and (3) a method in which the trihydrocarbylaluminum compound may be reacted with water in the presence of the monomer or monomer solution that is to be polymerized.

Aluminoxane compounds include methylaluminoxane (MAO) modified methylaluminoxane (MMAO), ethylaluminoxane, n-propylaluminoxane, isopropylaluminoxane, butylaluminoxane, isobutylaluminoxane, n-pentylaluminoxane, neopentylaluminoxane, n-hexylaluminoxane, n-octylaluminoxane, 2-ethylhexylaluminoxane, cyclohexylaluminoxane, 1-methylcyclopenty-laluminoxane, phenylaluminoxane, 2,6-dimethylphenylaluminoxane, and mixtures thereof. Modified methylaluminoxane can be formed by substituting about 20 to 80 % of the methyl groups of methylaluminoxane with C₂ to C₁₂ hydrocarbyl groups, preferably with isobutyl groups, by using techniques known to those skilled in the art.

Aluminoxanes can be used alone or in combination with other organoaluminium compounds. In one embodiment, methylaluminoxane and at least one other organoaluminium compound (e.g., AIRₙX₃₋ₙ) such as diisobutyl aluminium hydride are employed in combination.

One class of **organomagnesium compounds** that can be utilized may be represented by the formula MgR₂, where each R, which may be the same or different, is a monovalent organic group, with the proviso that the group is attached to the magnesium atom via a carbon atom. R is typically a hydrocarbyl group, and the resulting organomagnesium compounds are dihydrocarbylmagnesium compounds. Examples of the hydrocarbyl groups include, but are not limited to, alkyl, cycloalkyl, substituted cycloalkyl, alkenyl, cycloalkenyl, substituted cycloalkenyl, aryl, allyl, substituted aryl, aralkyl, alkaryl, and alkynyl groups. These hydrocarbyl groups may contain one or more heteroatoms such as, but not limited to, nitrogen, oxygen, silicon, sulphur, tin, and phosphorus atom.

Examples of suitable dihydrocarbylmagnesium compounds include diethylmagnesium, di-n-propylmagnesium, diisopropylmagnesium, dibutylmagnesium, dihexylmagnesium, diphenylmagnesium, dibenzylmagnesium, butylethylmagnesium, and mixtures thereof.

Another class of organomagnesium compounds that can be utilized include those that may be represented by the formula RMgX, where R is a monovalent organic group, with the proviso that the group is attached to the magnesium atom via a carbon atom, and X is a hydrogen atom, a halogen atom, a carboxylate group, an alkoxide group, or an aryloxide group. Typically R represents a hydrocarbyl group such as, but not limited to, alkyl, cycloalkyl, substituted cycloalkyl, alkenyl, cycloalkenyl, substituted cycloalkenyl, aryl, allyl, substituted aryl, aralkyl, alkaryl, and alkynyl groups. These hydrocarbyl groups may contain one or more heteroatoms such as, but not limited to, nitrogen, oxygen, boron, silicon, sulphur, tin, and phosphorus atoms. In one or more embodiments, X is a carboxylate group, an alkoxide group, or an aryloxide group.

Examples of organomagnesium compounds that can be represented by the formula RMgX include, but are not limited to, hydrocarbylmagnesium hydride, hydrocarbylmagnesium halide, hydrocarbylmagnesium carboxylate, hydrocarbylmagnesium alkoxide, hydrocarbylmagnesium aryloxide, and mixtures thereof.

Specific examples of organomagnesium compounds that may be represented by the formula RMgX include methylmagnesium hydride, ethylmagnesium hydride, butylmagnesium hydride, hexylmagnesium hydride, phenylmagnesium hydride, benzylmagnesium hydride, methylmagnesium chloride, ethylmagnesium chloride, butylmagnesium chloride, hexylmagnesium chloride, phenylmagnesium chloride, benzylmagnesium chloride, methylmagnesium bromide, ethylmagnesium bromide, butylmagnesium bromide, hexylmagnesium bromide, phenylmagnesium bromide, benzylmagnesium bromide, methylmagnesium hexanoate, ethylmagnesium hexanoate, butylmagnesium hexanoate, hexylmagnesium hexanoate, phenylmagnesium hexanoate, benzylmagnesium hexanote, methylmagnesium ethoxide, ethylmagnesium ethoxide, butylmagnesium ethoxide, hexylmagnesium ethoxide, phenylmagnesium ethoxide, benzylmagnesium ethoxide, methylmagnesium phenoxide, ethylmagnesium phenoxide, butylmagnesium phenoxide, hexylmagnesium phenoxide, phenylmagnesium phenoxide, benzylmagnesium phenoxide, and mixtures thereof.

The complex catalyst according to general formula (I) together with the preferably used alkylating agent leads to a catalytically active system.

Typically the molar ratio of the alkylating agent, which is most preferably at least one aluminoxane compound as described above, to the complex catalyst according to general formula (I) lies in a range of between 500-10,000, preferably in the range of from 500 to 5,000, more preferably in the range of from 600 to 2000 and most preferably 600 to 700.

Apart from the presence of the alkylating agent(s) as described above a fluorine-containing compound may be used as additional activator. Suitable fluorine-containing compounds include, but are not limited to, silicon tetrafluoride, aluminum trifluoride, indium trifluoride, zinc difluoride, dimethylaluminum fluoride, diethyl aluminum fluoride, methylaluminum difluoride, boron trifluoride, boron trifluoride being complexed with e.g. monohydric alcohols, phenols, water, mineral acids, water, aldehydes, esters, ethers, ketones and nitriles, and fluorine-containing boranes or salts thereof, more preferably tris(pentafluorophenyl)borane (B(C₆F₅)₃), [Me₂PhNH][B(C₆F₅)₄] or [Ph₃C][B(C₆F₅)₄].

The metal complex of formula (I) is typically present in an amount in the range of 10⁻⁷ to 10⁻³ mmol transition metal per mol of monomer. Preferably the transition metal complex of formula (I) is present in an amount in the range of 10⁻⁶ to 10⁻⁴ mmol transition metal per mol of monomer.

The polymerization process of the present invention can be carried out in a single reator or in one or more reactors placed in series or in parallel. Such reactor may be equipped with temperature regulating and agitating means.

The process may be performed batchwise, continuously or semi-continuously. Preferably the process is performed batch-wise. In the semi-continuous process, monomer is intermittently charged as needed to replace that monomer already polymerised.

The polymerization temperature generally lies in a range of from -10°C to 100°C, preferably in the range of from 20°C to 90°C. The heat of polymerization may be removed by external cooling, cooling by evaporation of the monomer or the solvent, or a combination of the two methods. The polymerization pressure employed may vary widely, a preferred pressure range is in the range of from 1 to 10 bar.

The polymerization can take place in the bulk phase, solution phase, or slurry phase. When the polymerization is carried out as bulk polymerization, i.e. in the absence of solvents, this may take place either in a condensed liquid phase or in a gas phase. Preferably the polymerization is conducted in solution or in gas phase. If performed in solution any suitable solvent may be used which does not deactivate the catalyst used and also does not adversely affect the polymerization in any other way. Useful solvents include hydrocarbon solvents such as aromatic hydrocarbons, aliphatic hydrocarbons, and cycloaliphatic hydrocarbons. Non-limiting examples of aromatic hydrocarbon solvents include benzene, toluene, xylenes, ethylbenzene, diethylbenzene, and mesitylene. Non-limiting examples of aliphatic hydrocarbon solvents include n-pentane, n-hexane, n-heptane, n-octane, n-nonane, n-decane, isopeneane, isohexanes, isopentanes, isoocatanes, 2,2-dimethylbutane, petroleum ether, kerosene, and petroleum spirits. Non limiting examples of cycloaliphatic hydrocarbon solvents include cyclopentane, cyclohexane, methylcyclopentane, and methylcyclohexane. Commercial mxitures of the above mentioned hydrocarbon solvents may also be used.

In case the transition metal complex catalyst of general formula (I) is used together with an alkylating agent the catalyst composition is formed by combining or mixing the transition metal complex catalyst of general formula (I).

Although an active catalyst species is believed to result from this combination, the degree of interaction or reaction from this combination, the degree of interaction or reaction between the various ingredients or components is not known with any great degree of certainty. Therefore, the term "catalyst composition" is employed to encompass a simple mixture of the ingredients, a complex of the various ingredients that is caused by physical or chemical forces of attraction a chemical reaction product of the ingredients, or a combination of the foregoing. The catalyst composition may be formed by using one of the following methods.

First, the catalyst composition may be formed in situ by adding the catalyst ingredients to a solution containing monomer and solvent, or simply bulk monomer, in either a stepwise or simultaneous manner. When adding the catalyst ingredients in a stepwise manner, the sequence in which the catalyst ingredients are added is not critical. Preferably, however, the alkylating agent is added first, followed by the transition metal complex catalyst.

Second, the catalyst ingredients may be pre-mixed outside the polymerization system at an appropriate temperature which is generally from about -20°C to about 80°C, and the resulting catalyst composition is then added to the monomer solution or simply bulk monomer.

Third, the catalyst composition may be formed by using a two-stage procedure. The first stage involves combining the alkylating agent with the transition metal complex catalyst in the absence of conjugated diene monomer or in the presence of a small amount of conjugated diene monomer at an appropriate temperature which is generally from about -20°C to about 80°C. In the second stage, the foregoing reaction mixture and the remaining catalyst components are charged in either a stepwise or simultaneous manner to the remainder of the conjugated diene monomer that is to be polymerised.

If a solution of the catalyst composition or of the catalyst ingredients is prepared outside the polymerization system an organic solvent is preferably employed which may serve to dissolve the catalyst composition or ingredients, or may simply serve as a carrier in which the catalyst composition or ingredients may be suspended. In performing the polymerization, an amount of organic solvent in addition to the amount of organic solvent that may be used in preparing the catalyst composition is preferably added to the polymerization system. Such additional organic solvent can be the same as or different from the organic solvent used for preparing the catalyst composition. Again, the organic solvent should be inert with respect to the catalyst composition employed to catalyse the polymerization is preferably selected. The concentration of the monomer to be polymerised is not limited to a specific range. However, the concentration of the monomer present in the polymerization medium at the beginning of the polymerization typically lies in the range of from 3% to 80% by weight, more preferably from 5 % to 50% by weight and even more preferably from 10% to 30 % by weight.

In a preferred embodiment of the polymerization process according to the invention the catalyst pursuant to general formula (I) is contacted with an alkylating agent and pre-mixed, if desired under stirring. Such pre-mixing takes place at ambient temperature. Both, the catalyst and the alkylating agent, are typically contacted in dissolved form with each other. The monomer/co-monomers are then charged to a reactor, typically as a solution in an organic solvent. In a preferred embodiment a small amount of alkylating agent is added to such monomer solution to act as a scavenger. The monomer solution is then brought to the desired temperature. Thereafter the catalyst solution, optionally as a premix with an alkylating agent, is added to the monomer solution and the polymerization started.

The polymerization time typically ranges from 5 minutes to 24 hours and depends on the other polymerization conditions such as temperature, pressure as well as the specific catalyst chosen from general formula (I).

### Termination of the polymerization:

When the desired conversion is reached, the polymerization can be stopped by adding a polymerization stopping agent that inactivates the catalyst. Typically the stopping agent employed is a protic compound, which includes, but is not limited to, an alcohol, a carboxylic acid, an inorganic acid, water, or a mixture thereof. Non-limiting examples of alcohols are methanol, ethanol, isopropanol, propanol, and butanol.

Before, along with or after the addition of the stopping agent an antioxidant such as 2,6-di-tert-butyl-4-methylphenol (BHT) can be added. The amount of the anitoxidant employed is typically in the range of from 0.01 % to 1 % by weight of the polymer.

After the polymerization has been stopped, the polymer can be recovered by any conventional methods known to the person skilled in the art. This, e.g. encompasses the removal of the solvent and drying. The polymer may be isolated from the polymerization mixture by coagulation with an alcohol such as methanol, ethanol, or isopropanol, followed by filtration and washing, or in the alternative by steam distillation of the solvent and the unreacted monomer, followed by filtration and washing. The isolated polymer is then typically dried to remove residual amounts of solvent and/or water. Alternatively the polymer may be isolated from the polymerization mixture by directly drum drying the polymer cement.

### Examples:

### General procedures:

Manipulations were carried out using standard Schlenk and glovebox techniques (O₂ level < 0.1 ppm; N₂ as inert gas), unless otherwise stated. Solvents, namely CH₂Cl₂, Et₂O, THF, toluene, pentane, and hexane, were used in dried form and stored under nitrogen. CrCl₃(THF)₃, and CrCl₂(THF)₂, were prepared in accordance with *J. .Inorg. Nucl. Chem.* **1962,** *24*, 1105. NdCl₃(THF)₃ was prepared according to *Inorg. Synth.* **1982,** *21*, 135. CoCl₂, FeCl₂ and NiCl₂(DME) were purchased from Strem, 1,3-Butadiene was purchased from Aldrich and used as received. Acrylonitrile was purchased from Aldrich and was purified by drying over CaH₂ followed by vacuum transfer. HN(CH₂CH₂)NH₂ was purchased from Aldrich, MeN(CH₂CH₂)NH₂, O(CH₂CH₂)NH₂, and S(CH₂CH₂)NH₂ were purchased from TCI, stored over 4Å molecular sieves and degassed before use. The dibromophosphoranes Ph₃PBr₂, Et₃PBr₂, iPr₃PBr₂, and tBu₂MePBr₂ were prepared according to *Tet. Lett.* **1985,** *26,* 3041. HN(C₆H₄NH₂)₂, was prepared according to *Aust. J. Chem.* **1983,** *36,* 1141. MeN(C₆H₄NH₂)₂, was prepared according to *J. Chem. Soc.* **1952,** 2276. O(C₆H₄N=PPh₃)₂, was synthesized according to *J. Org. Chem.* **1994,** *59,* 7306. Ph₃P=N(2,6-iPr₂C₆H₄) was prepared according to *Organometallics 2004, 23,* 381 and Ph₃P=NCH₂CH₂CH₃ was synthesised according to *Bull. Soc. Chim. Fr.* **1989,** 515. Ligands **1, 2, 5** and **8** were prepared according to *Dalton Trans.* **2011**, *40*, 4919-4926

Polymer samples were dissolved in chlorofonn-*d*₁ at ambient temperature in a 5 mm NMR tube. ¹H and ¹³C{¹H} NMR spectra were recorded on a Bruker Avance 400 MHz spectrometer at ambient temperature. Polymer samples soluble in chloroform were deposited on a KBr disk and the chloroform was evaporated to create a thin film. IR spectra were recorded on a Perkin-Elmer Spectrum ONE FT-IR spectrometer. Molecular weights were determined by GPC using Empower GPC/SEC software, connected to a Waters 2414 Refractory Index Detector versus polystyrene standards (molecular weight 1200-2,600,000). Samples were injected onto three linear 5 micron columns, using THF as eluant, at a flow rate of 1.0 cm³.min⁻¹ at 35°C. Single crystals were mounted in thin-walled capillaries either under an atmosphere of dry N₂ in a glove box and flame sealed or coated in paratone-N oil. The data were collected using the SMART software package on a Siemens SMART System CCD diffractometer using a graphite monochromator with MoKα radiation (λ = 0.71073 Å). Data reduction was performed using the SAINT software package and an absorption correction applied using SADABS. The structures were solved by direct methods using XS and refined by full-matrix least-squares on F² using XL as implemented in the SHELXTL suite of programs according to Sheldrick, G. M.; Bruker AXS Inc.: Madison, WI, 2000. All non-hydrogen atoms were refined anisotropically. Carbon-bound hydrogen atoms were placed in calculated positions using an appropriate riding model and coupled isotropic temperature factors.

### Synthesis of ligands:

### Ligand type A:

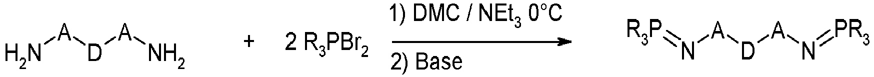

In the following the synthesis of ligands in accordance with the above formula is described with meanings of D, R, and A as indicated in Table 1.

**Table 1:**

| **Ligand** | **D** | **R** | **A** |
|---|---|---|---|
| **1** | N-H | Ph | C₂H₄ |
| **2** | N-Me | Ph | C₂H₄ |
| **3** | O | Ph | C₂H₄ |
| **4** | S | Ph | C₂H₄ |
| **5** | N-H | *^{l}*Pr | C₂H₄ |
| **6** | N-H | Et | C₂H₄ |
| **7** | N-H | (*^{t}*Bu)₂Me | C₂H₄ |
| **8** | N-H | Ph | C₆H₄ |
| **9** | N-Me | Ph | C₆H₄ |
| **10** | C₆H₃N | Ph | CH₂ |

### Typical ligand synthesis for ligand (1):

Ph₃PBr₂ (10.0 g, 23.7 mmol) in ca. 200 mL of CH₂Cl₂ was added at 0 °C to a solution of HN(CH₂CH₂NH₂)₂ (1.27 mL, 11.8 mol) in 60 mL of 1:1 CH₂Cl₂/NEt₃. The mixture was stirred at room temperature for 1 h and then the solvent was removed in *vacuo.* The residue was suspended in THF (100 mL) and cooled to 0 °C. K[N(SiMe₃)₂ (4.71 g, 23.6 mmol) in THF (50 mL) was added, stirred at room temperature for 30 min and the volatiles removed in *vacuo.* The residue was redissolved in THF and the second deprotonation was repeated in the same way. The solution was filtered through Celite and the solvent was removed. The residue was triturated with ether (ca. 100 mL), the resulting solid was collected filtered and dried in *vacuo* to give a yield of 5.2 g of 1 (70 %).
¹**H NMR (C₆D₆):** 7.78 (m, 12 H, C₆*H*₅); 7.01 (m, 18 H, C₆*H*₅); 3.68 (dt, 4H, ³J_{HP} = 14.6 Hz, ³J_{HH} = 5.7 Hz, C*H*₂); 3.28 (t, 4H, ³J_{HH} = 5.7 Hz, C*H*₂).
**³¹P{¹H} NMR (C₆D₆):** 5.9.
**¹³C{¹H} NMR (C₆D₆):** 134.0 (*C*q), 132.6 (d, *C*H, J_{CP} = 12 Hz), 130.6 (d, CH, J_{PC} = 4 Hz), 128.8 (d, *C*H, J_{CP} = 15 Hz), 55.4 (d, *C*H₂, ²J_{CP} = 29 Hz), 45.6 (d, *C*H₂, ³J_{CP} = 7 Hz).
**+ESI-MS(m/z):** 624 [M+H]⁺.
**Anal. Calcd. for C₄₀H₃₉N₃P₂:** C, 77.03; H, 6.30; N, 6.74. Found: C, 76.61; H, 6.90; N, 6.72.

### Ligand 2:

A similar procedure was used to that described for **1,** using Ph₃PBr₂ (2.50 g, 5.92 mmol) and MeN(CH₂CH₂NH₂)₂ (0.38 mL, 2.96 mmol). Yield of Ligand (2): 1.55g (82%).
**¹H NMR (C₆D₆):** 7.75 (m, 12 H, C₆*H*₅); 7.03 (m, 18H, C₆*H*₅); 3.72 (m, 4H, C*H*₂); 3.07 (t, 4H, ³JHH = +7Hz C*H*₂), 2.41 (s, 3H, N-C*H*₃).
**³¹P{¹H} NMR (C₆D₆):** 6.0.
**¹³C{¹H} NMR (C₆D₆):** 132.7 (d,*C*H, *J*_{CP} = 8.8Hz), 130.6 (d,*C*H, *J*_{CP} = 2.7Hz), 128.2 (Cq), 127.7 (d, *C*H, *J*_{CP} = 24.4Hz), 64.9 (d, *C*H₂, ²*J*_{CP} = 21.1Hz), 44.6 (d,*C*H₂, ³*J*_{CP} = 4.9 Hz), 44.0 (*N-C*H₃).
**Anal. Calcd. for C₄₁H₄₁N₃P₂ (637.73):** C, 77.22; H, 6.48; N, 6.59. **Found:** C, 77.02; H, 6.22; N, 6.34.

### Ligand 3:

A similar procedure was used to that described for **1,** using Ph₃PBr₂ (2.00 g, 4.74 mmol) and O(CH₂CH₂NH₂)₂ (0.246 g, 2.37 mmol). Yield of Ligand (3) 1.55g (82%).
**¹H NMR (C₆D₆):** 7.77 (m, 12H, C₆*H*₅), 7.04 (m, 18H, C₆*H*₅), 3.93 (t br, 4H, C*H*₂), 3.63 (m br, 4H, C*H*₂)
**³¹P{¹H} NMR (C₆D₆):** 5.5.
**Anal. Calcd. for C₄₀H₃₈N₂OP₂ (624.69):** C, 76.91; H, 6.13; N, 4.48. **Found:** C, 76.57 ; H, 6.58; N, 4.69.

### Ligand 4:

A similar procedure was used to that described for **1,** using Ph₃PBr₂ (1.50 g, 3.55 mmol) and S(CH₂CH₂NH₂)₂ (0.2 mL, 0.18 mmol). Yield of Ligand (4): 1.55g (82%).
**¹H NMR (C₆D₆):** 7.72 (m, 12H, C₆*H*₅); 7.02 (m, 18H, C₆*H*₅); 3.73(m, 4H, C*H*₂); 3.12 (m, 4H, C*H*₂).
**³¹P{¹H} NMR (C₆D₆): 5.1.**

### Ligand 5:

A similar procedure was used to that described for **1,** using *ⁱ*Pr₃PBr₂ (2.0 g, 6.25 mmol) and HN(CH₂CH₂NH₂)₂ (0.34 mL, 3.13 mmol). Yield of Ligand (5): 1.04 g (80%).
**¹H NMR (C₆D₆):** 3.61 (dt, 4H, HNCH₂CH₂, ³J_{HH}= 6 Hz, ⁴J_{HP} = 12 Hz), 3.08 (t, 4H, HNC*H*₂CH₂, ³J_{HH}= 6 Hz), 2.69 (s broad, 1H, N*H*), 2.14 (dq, 6H, CH *ⁱ*Pr, ³J_{HH}= 7 Hz, ²J_{H-P} = Hz), 1.26 (dd, 36H, C*H*₃ *i*Pr, ³J_{HH}= 7 Hz, ³J_{HP} = 13 Hz).
**³¹P{¹H} NMR (C₆D₆):** 27.9.
**¹³C{¹H} NMR (C₆D₆):** 56.6 (d, NHCH₂*C*H₂, ²J_{PC} = 18 Hz), 46.6 (d, HN*C*H₂CH₂, ³J_{PC} = 6 Hz), 24.6 (d, *C*H *ⁱ*Pr, ¹J_{PC} = 57 Hz), 17.4 (d, *C*H₃ *ⁱ*Pr, ²J_{PC} = 3 Hz).
**+ESI-MS(m/z):** 420 [M+H]⁺.
**Anal. Calcd. for C₂₂H₅₁N₃P₂:** C, 62.97; H, 12.25; N, 10.01. **Found:** C, 62.42; H, 12.06; N, 9.88.

### Ligand 6:

A similar procedure was used to that described for **1,** using Et₃PBr₂ (2.0 g, 7.19 mmol) and HN(CH₂CH₂NH₂)₂ (0.19 g, 3.60 mmol). Yield of Ligand (6): 1.04 g (67%).
**¹H NMR (C₆D₆):** 3.51 (dt, 4H, HNCH₂C*H*₂, ³J_{HH}= 6 Hz, ⁴J_{HP} = 17 Hz), 3.13 (t, 4H, HNC*H*₂CH₂, ³J_{HH}= 6 Hz), 1.26 (m, 12H, CH₂ Et), 0.89 (m, 18H, ³J_{HH} = 8 Hz, ³J_{HP} = 15 Hz CH₃).
**³¹P{¹H} NMR (C₆D₆):** 22.8.
**Anal. Calcd. for C₁₅H₃₇N₃P₂ (321.42):** C, 56.05; H, 11.60; N, 13.07. **Found:** C, 56.28; H, 11.42; N, 12.84.

### Ligand 7:

A similar procedure was used to that described for 1, using ^{t}Bu₂MePBr₂ (1.0 g, 3.12 mmol) and HN(CH₂CH₂NH₂)₂ (0.17 mL, 0.16 mmol). Yield of Ligand (7) 0.40g (60 %).
**¹H NMR (C₆D₆):** 3.52 (m, 4H, C*H*₂), 3.05 (m, br, 4H, C*H*₂), 1.01 (s, 9H,CH₃ *^{t}*Bu), 0.92 (s, 9H, CH₃ *^{t}*Bu), 0.86 (s, 3H, CH₃ Me), 0.79 (s, 3H, CH₃ Me).
**³¹P{¹H} NMR (C₆D₆):** 27.9.
**Anal. Calcd. for C₂₂H₅₁N₃P₂ (419.61):** C, 62.97; H, 12.25; N, 10.01. **Found:** C, 63.23; H, 12.11; N, 10.38.

### Ligand 8:

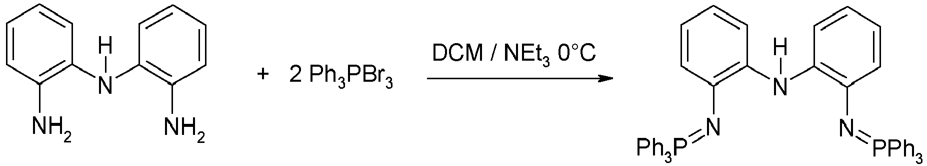

A solution of Ph₃PBr₂ (2.15 g, 5.10 mmol) in of CH₂Cl₂ (100 mL) was added slowly to a solution of HN(C₆H₄NH₂)₂ (0.508 g, 2.55 mmol) in CH₂Cl₂ (10 mL) and NEt₃ (7 mL) at 0°C. The reaction was stirred 15 min at this temperature and allowed to warm up to room temperature for 30 min. Volatiles were evaporated under *vacuo* and the residue extracted with THF (150 mL) and filtered through a pad of Celite. Solvents were evaporated to dryness to afford a green solid. Recrystallisation from CH₂Cl₂/Et₂O. Yield of Ligand (8): 1.62g (88%).

**¹H NMR (CD₂Cl₂):** 8.63 (s br, 1H, N*H*), 7.83 (m, 12H, Ar*H*), 7.44 (dt, ³J_{HH} = 7.4 Hz, ⁴J_{HH} = 1.4 Hz, 8H, ArH), 7.27 (dt, ³J_{HH} = 7.7 Hz, ⁴J_{HH} = 2.9 Hz, 12H, ArH), 6.64 (td, 2H, ³J_{HH} = 7.6 Hz, ⁴J_{HH} = 1.5 Hz, C₆*H*₄), 6.46 (dt, ³J_{HH} = 7.7 Hz, ⁴J_{HH} = 1.3 Hz, 2H, C₆*H*₄), 6.40 (td, ³J_{HH} = 7.5 Hz, ⁴J_{HH} = 1.5 Hz, 2H, C₆*H*₄),
**³¹P{¹H} NMR (CD₂Cl₂):** 3.8.
**¹³C{¹H} NMR (CD₂Cl₂):** 140.1 (*C*q), 138.5 (d, CH, J_{CP} = 21 Hz), 133.0 (d, CH, J_{CP} = 10 Hz), 131.9 (d, CH, J_{CP} = 3 Hz), 131.8 (CH), 130.8 (CH), 128.4 (d, CH, J_{CP} = 12 Hz), 120.2 (d, CH, J_{CP} = 10 Hz), 118.6(*C*H), 117.9(*C*H), 113.4(*C*H)_{.}
**+ESI-MS(m/z):** 720 [M+H]⁺.
**Anal. Calcd (%) for C₄₈H₃₉N₃P₂ (719.79):** C, 80.09; H, 5.46; N, 5.84. **Found:** C, 79.98; H, 5.89; N, 5.80.

### Ligand 9:

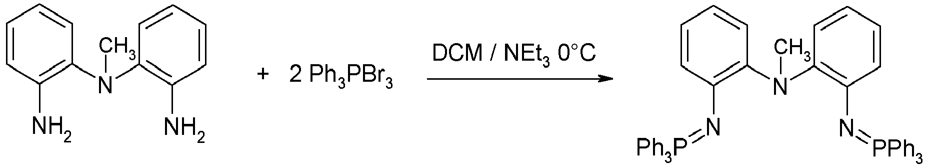

A solution of Ph₃PBr₂ (1.98 g, 4.69 mmol) in of CH₂Cl₂ (100 mL) was added slowly to a solution of MeN(C₆H₄NH₂)₂ (0.500 g, 2.34 mmol) in CH₂Cl₂ (10 mL) and NEt₃ (7 mL) at 0°C. The reaction was stirred 15 min at this temperature and allowed to warm up to room temperature for 30 min. Volatiles were evaporated under *vacuo* and the residue extracted with THF (150 mL) and filtered through a pad of Celite. Solvents were evaporated to dryness to afford a green solid. Recrystallisation from CH₂Cl₂/Et₂O. Yield of Ligand (9): 1.28g (74%).
**¹H NMR(C₆D₆):** 7.68 (m, 12H, C₆*H*₅); 7.38 (m, 2H, NC₆*H*₄); 6.96 (m, 6H, C₆*H*₅); 6.88 (m, 12H, C₆*H*₅); 6.82 (m, 4H, NC₆*H*₄); 6.70 (d, 2H, NC₆*H*₄); 3.92 (s, 3H, C*H*₃).
**³¹P{¹H} NMR (C₆D₆):** -3.3.
**¹³C{¹H} NMR (C₆D₆):** 144.1 (*C*q), 133.5 (*C*q), 133.2 (d, CH, J_{CP} = 10Hz), 132.5 (*C*q), 130.8 (d, CH, J_{CP} = 3Hz), 128.3 (CH), 122.5 (CH), 122.4 (CH), 121.77 (CH), 40.2 (N-*C*H₃).
**Anal. Calcd (%) for C₄₉H₄₁N₃P₂ (733.82):** C, 80.20; H, 5.63; N, 5.73. **Found:** C,80.41; H, 5.82; N, 5.35.

### Ligand 10:

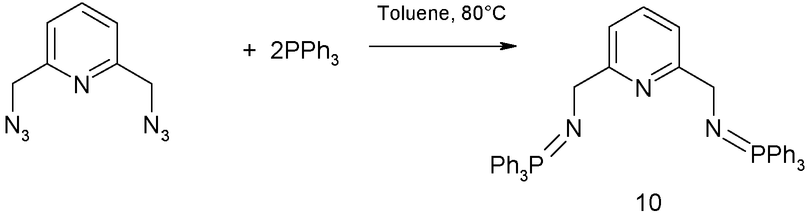

PPh₃ (584 mg, 2.23 mmol) was added to 2,6-Bis(azidomethyl)pyridine (211 mg, 1.12 mmol) in 5mL toluene and heated to 80°C for 12h. The solvent was removed in vacuo and the residue washed with pentane to afford 10 as a white solid. Yield of Ligand (10): 0.665g (90%)
**¹H NMR(CD₂Cl₂):** 7.59 (m 12H, C₆*H*₅), 7.53 (s, 3H, C₅*H*₃N))7.42 (m, 6H, C₆*H*₅),7.34 (m, 12H, C₆*H*₅) 4.19 (d, 4H, ²J_{HH} = 16.6 Hz, CH₂)
**³¹P{¹H} NMR (CD₂Cl₂):** 9.6

### Ligands type B:

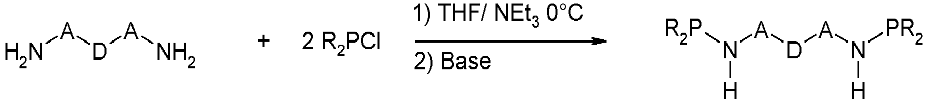

In the following the synthesis of ligands in accordance with the above formula is described with meanings of D, R^{1, 2, 3} and A as indicated in Table 2.

**Table 2:**

| **Ligand** | **D** | **R** | **A** |
|---|---|---|---|
| **11** | N-H | iPr | C₂H₄ |
| **12** | N-Me | iPr | C₂H₄ |

### Ligand 11:

A 250 mL round bottom schlenk flask was charged with 2,2'-Oxybis(ethylamine) (1.00 mL, 9.4 mmol) and 100 mL of THF and stirred under nitrogen. Triethylamine (14.38 g, 19.81 mL, 141.14 mmol) was added to the flask and the reaction mixture was stirred for 1 hour. Neat chlorodiisopropylphosphine (3.00 mL, 18.82 mmol) was added to the stirring solution dropwise over 5 minutes giving a cloudy white solution. The reaction mixture was stirred for an additional 24 hours before being dried in vacuo. The white solid was then combined with toluene and stirred before being filtered through celite. The clear colourless solution was dried in vacuo giving the desired product as an oily solid. Yield of Ligand (11): 2.61 g (83%).
**¹H NMR(CD₂Cl₂):** 3.45 (t, 4H, ³J_{HH}= 5.55 Hz, O-C*H*₂), 3.11 (d of quart, 4H, ³J_{HH}= 5.55 Hz,³J_{HP}= 8.61 Hz,-C*H*₂-N), 1.61 (sept, 4H, ³J_{HH} = 7.04 Hz,(CH₃)₂C*H*), 1.41 (m, 2H, NH), 1.05 (m, 24H, (C*H*₃)₂CH). **³¹P{¹H} NMR (CD₂Cl₂):** 65.7
**¹³C{¹H} NMR (CD₂Cl₂):** 73.5 (d, ³J_{CP} = 5.87 Hz, ), 48.9 (d, ²J_{CP} = 24.21 Hz, -C*H*₂-N ), 27.1 (d, ¹J_{CP} = 11.74 Hz, (CH₃)₂*C*H)), 19.5 (d, ²J_{CP} = 20.54 Hz, (*C*H₃)₂CH), 17.7 (d, ²J_{CP} = 8.07 Hz, (*C*H₃)₂CH)).

### Ligand 12:

A similar procedure was used to that described for **11,** using HN(CH₂CH₂NH₂)₂ (1.00 mL, 9.26 mmol) and ClPiPr₂ (2.95 mL, 18.48 mmol). Yield of Ligand (12): 2.70g (87 %).
**¹H NMR (CD₂Cl₂):** 2.97 (m, 4H, ³J_{HH} = 5.87, C*H*₂), 2.61 (t, 4H, ³J_{HH} = 5.87 Hz, C*H*₂), 1.99 (b, 1H, NH), 1.56 (sept, 4H, ³J_{HH} = 7.04 Hz, (CH₃)₂C*H*), 1.34 (m, 2H, N*H*), 1.00 (m, 12H, ³J_{HH} = 7.04 Hz, (C*H*₃)₂CH), 0.97 (m, 12H, ³J_{HH} = 7.04 Hz, (C*H*₃)₂CH).
**³¹P{¹H} NMR (CD₂Cl₂):** 65.5.
**¹³C{¹H} NMR (CD₂Cl₂):** 52.5 (d, J_{CP} = 5.87 Hz, -C*H*₂- ), 48.6 (d, J_{CP} = 23.48 Hz, -C*H*₂-), 26.9 (d, ¹J_{CP} = 11.74 Hz, (CH₃)₂*C*H)), 19.4 (d, ²J_{CP} = 19.81 Hz, (*C*H₃)₂CH), 17.6 (d, ²J_{CP} = 8.07 Hz, (*C*H₃)₂CH)).

### EXAMPLES 1 to 16: Synthesis of chromium(III) complexes

### Example 1:

### Synthesis of HN(CH₂CH₂N=PPh₃)₂CrCl₃ (13)

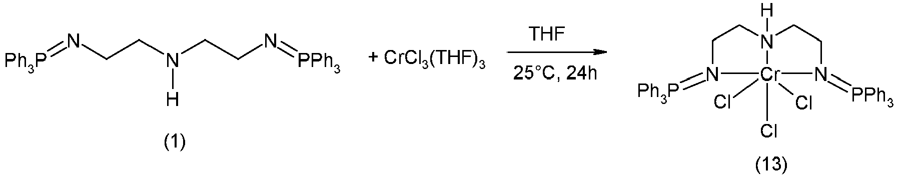

CrCl₃(THF)₃ (70 mg, 0.19 mmol) was added to **1** (120 mg, 0.19 mmol) in THF (5 mL) and the mixture was stirred overnight. The purple solid was collected by vacuum filtration on a plug of Celite and was washed with cold THF (2 mL) and then dried in vacuo. The purple solid was dissolved in CH₂Cl₂ (*ca.* 10 mL) and then filtered through Celite. Ether (*ca.* 20 mL) was added dropwise resulting in the precipitation of a blue-purple solid. The solid was collected by filtration and dried in vacuo.
**Yield** of complex (13): 118 mg (81 %). µ_{eff} = 3.49 BM.
**³¹P{¹H} NMR (CD₂Cl₂):** 35.4.
Anal. **Calcd.** for **C₄₀H₃₉Cl₃CrN₃P₂ (782.06):** C, 61.43; H, 5.03; N, 5.37. **Found:** C, 60.96; H, 5.35; N, 5.14.

### Example 2:

### Synthesis of MeN(CH₂CH₂N=PPh₃)₂CrCl₃ (14)

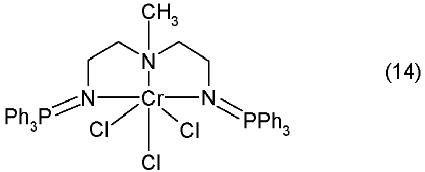

The same procedure was used as described for **13** except for using CrCl₃(THF)₃ (144 mg, 0.38 mmol), and **2** (244 mg, 0.38 mmol).
**Yield** of complex (14): 235 mg (78%). µ_{eff} = 3.42 BM.
**Anal. Calcd. for C₄₁H₄₁Cl₃CrN₃P₂ (796.09):** C, 61.86; H, 5.19; N, 5.28. **Found:** C, 59.84; H, 5.57; N, 5.03.

### Example 3:

### Synthesis of HN(CH₂CH₂N=PⁱPr₃)₂CrCl₃ (15)

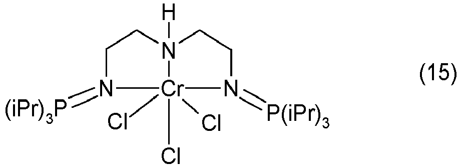

The same procedure was used as described for **13** except for using CrCl₃(THF)₃ (55 mg, 0.15 mmol) and 5 (57 mg, 0.15 mmol).
**Yield** of complex (15): 49 mg (61%). µ_{eff} = 3.56 BM.
**Anal. Calcd. for C₂₀H₄₇Cl₃CrN₃P₂ (549.91):** C, 43.68; H, 8.61; N, 7.64. **Found:** C, 42.17; H, 8.93; N, 7.56.

### Example 4:

### Synthesis of HN(CH₂CH₂N=PEt₃)₂CrCl₃ (16)

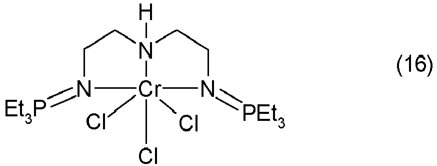

The same procedure was used as described for **13** except for using CrCl₃(THF)₃ (73 mg, 0.19 mmol), and 6 (66 mg, 0.19 mmol).
**Yield** of complex (16): 68 mg (73%). µ_{eff} = 3.80BM.
**Anal. Calcd. for C₄₁H₄₁Cl₃CrN₃P₂ (796.09):** C, 61.86; H, 5.19; N, 5.28. **Found:** C, 60.54;H, 4.87; N, 4.95.

### Example 5:

### Synthesis of HN(CH₂CH₂N=P(Me)^{t}Bu₂)₂CrCl₃ (17)

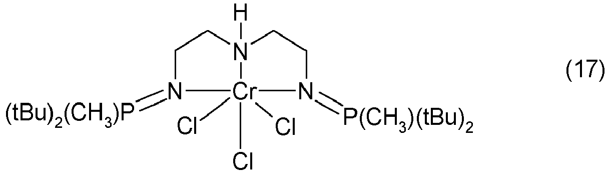

The same procedure was used as described for **13** except for using CrCl₃(THF)₃ (89 mg, 0.24 mmol), and 7 (100 mg, 0.24 mmol).
**Yield** of complex (17): 121 mg (87%). µ_{eff} = 3.69 BM.
**Anal. Calcd. for C₂₂H₅₁Cl₃CrN₃P₂ (577.96):** C, 45.72; H, 8.89; N, 7.27. Found: C, 43.08; H, 9.27; N, 7.66.

### Example 6:

### Synthesis of HN(C₆H₄N=PPh₃)₂CrCl₃ (18)

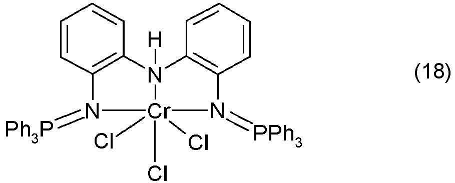

The same procedure was used as described for **13** except for using CrCl₃(THF)₃ (52 mg, 0.14 mmol) and **8** (99 mg, 0.14 mmol).
**Yield** of complex (18): 95 mg (77%). µ_{eff} = 3.72 BM.
**Anal. Calcd. for C₄₈H₃₉Cl₃CrN₃P₂ (878.15):** C, 65.65; H, 4.48; N, 4.79. **Found:** C,63.29; H, 4.59; N, 4.92.

### Example 7:

### Synthesis of MeN(C₆H₄N=PPh₃)₂CrCl₃ (19)

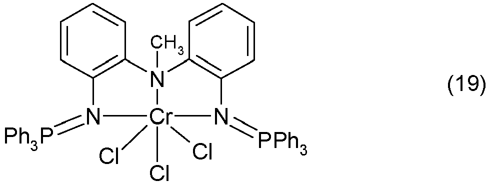

The same procedure was used as described for **13** except for using CrCl₃(THF)₃ (123 mg, 0.33 mmol) and **9** (242 mg, 0.33 mmol).
**Yield** of complex (19): 249 mg (85%). µ_{eff} = 3.73 BM.
**³¹P{¹H} NMR (CD₂Cl₂):** 34.9.
**Anal. Calcd. for C₄₉H₄₁Cl₃CrN₃P₂ (892.17):** C, 65.97; H, 4.63; N, 4.71. **Found:** C, 63.85; H, 4.98; N, 4.49.

### Example 8:

### Synthesis of O(CH₂CH₂N=PPh₃)₂CrCl₃ (20)

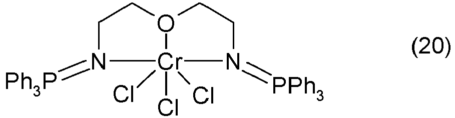

The same procedure was used as described for **13** except for using CrCl₃(THF)₃ (63mg, 0.17mmol) and **3** (105 mg, 0.17 mmol).
**Yield** of complex (20) 127 mg (96%). µ_{eff} = 3.83BM.
**³¹P{¹H} NMR (CD₂Cl₂):** 41.8.

### Example 9:

### Synthesis of O(CH₂CH₂CH₂N=PPh₃)₂CrCl₃ (21)

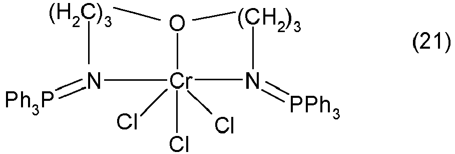

The same procedure was used as described for 13 except for using CrCl₃(THF)₃ (58 mg, 0.15 mmol), O(CH₂CH₂CH₂N=PPh₃)₂ (100 mg, 0.15 mmol).
**Yield** of complex (21): 111 mg (90%). µ_{eff} = 3.57BM.
**³¹P{¹H} NMR (CD₂Cl₂):** 39.3.

### Example 10:

### Synthesis of O(C₆H₄N=PPh₃)₂CrCl₃ (22)

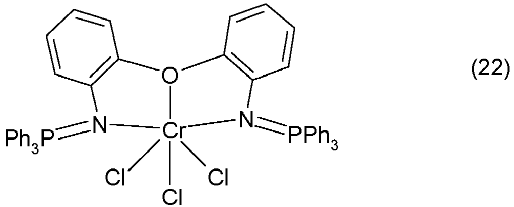

The same procedure was used as described for **13** except for using CrCl₃(THF)₃ (52 mg, 0.14 mmol), O(C₆H₄N=PPh₃)₂ (100 mg, 0.14 mmol).
**Yield** of complex (22): 119 mg (98%). µ_{eff} = 3.96BM.
**³¹P{¹H} NMR (CD₂Cl₂): 36.4.**
**Anal. Calcd. for C₄₈H₃₈Cl₃CrN₂OP₂ (879.13):** C, 65.58; H, 4.36; N, 3.19. **Found**: C, 62.67; H, 4.63; N, 3.23.

### Example 11:

### Synthesis of S(CH₂CH₂N=PPh₃)₂CrCl₃ (23)

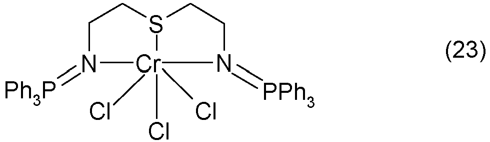

The same procedure was used as described for **13** except for using CrCl₃(THF)₃ (122 mg, 0.33 mmol) and **4** (209 mg, 0.33 mmol).
**Yield** of complex (23): 195 mg (74%). µ_{eff} = 3.91BM.
**Anal. Calcd.** for **C₄₀H₃₈Cl₃CrN₂P₂S (799.11):** C, 60.12; H, 4.79; N, 3.51. Found: C, 59.24; H, 5.03; N, 3.64.

### Example 12:

### Synthesis of (NC₆H₃)(CH₂N=PPh₃)₂CrCl₃(24)

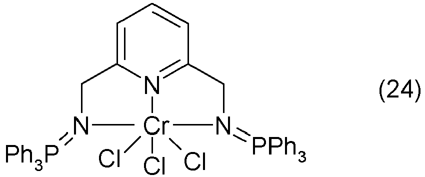

The same procedure was used as described for **13** except for using CrCl₃(THF)₃ (57 mg, 0.15 mmol) and **10** (100 mg, 0.15 mmol).
**Yield** of complex (24): 106 mg (85%). µ_{eff} = 3.70BM.
**Anal. Calcd. for C₄₃H₃₇Cl₃CrN₃P₂ (816.08):** C, 63.29; H, 4.57; N, 5.15. **Found:** C, 62.14; H, 4.51; N, 5.36.

### Example 13:

### Synthesis of (2,6-iPr₂-C₆H₄N=PPh₃)₂CrCl₃ (25)

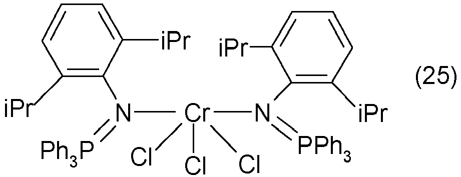

The same procedure was used as described for **13** except for using CrCl₃(THF)₃ (22 mg, 0.06 mmol) and Ph₃P=N(2,6-iPr₂-C₆H₄) (50 mg, 0.11 mmol).
Yield of complex (25): 31mg (52%).
**³¹P{¹H} NMR (CD₂Cl₂): 44.3.**

### Example 14:

### Synthesis of (CH₃CH₂CH₂N=PPh₃)₂CrCl₃ (26)

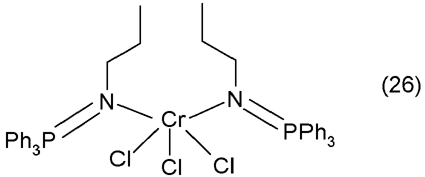

The same procedure was used as described for 13 except for using CrCl₃(THF)₃ (13 mg, 0.03 mmol) and Ph₃P=NCH₂CH₂CH₃ (20 mg, 0.07 mmol).
**Yield** of complex (26): 18mg (72%).
**³¹P{¹H} NMR (CD₂Cl₂): 43.9.**

### EXAMPLES 15 to 20: Synthesis of chromium(II) complexes

### Example 15:

### Synthesis of HN(CH₂CH₂N=PPh₃)₂CrCl₂ (27)

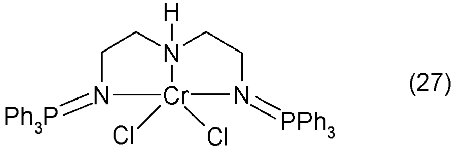

The same procedure was used as described for 13 except for using CrCl₂(THF)₂ (47 mg, 0.18 mmol) and 1 (110 mg, 0.18 mmol).
**Yield** of complex (27): 100 mg (74%). µ_{eff} = 4.85BM.
**Anal. Calcd. for C₄₀H₃₉Cl₂CrN₃P₂ (746.61):** C, 64.35; H, 5.27; N, 5.63. **Found:** C, 61.69; N, 5.58; H, 5.32.

### Example 16:

### Synthesis of MeN(CH₂CH₂N=PPh₃)₂CrCl₂ (28)

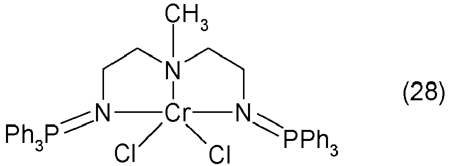

The same procedure was used as described for **13** except for using CrCl₂(THF)₂ (43 mg, 0.16mmol) and **2** (100 mg, 0.16 mmol).
**Yield** of complex (28): 82 mg (67%). µ_{eff}=4.81 BM
**Anal. Calcd. for C₄₁H₄₁Cl₂CrN₃P₂ (760.63)**: C, 64.74; H, 5.43; N, 5.52. **Found:** C, 64.01; H,5.27; N, 5.88.

### Example 17:

### Synthesis of HN(CH₂CH₂N=PEt₃)₂CrCl₂ (29)

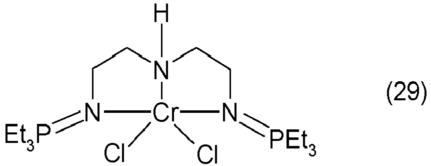

The same procedure was used as described for 13 except for using CrCl₂(THF)₂ (47 mg, 0.18 mmol) and 6 (59 mg, 0.18 mmol).
**Yield** of complex (29): 53 mg (64%).µ_{eff} = 4.89 BM.
**Anal. Calcd. for C₁₆H₃₉Cl₂CrN₃P₂ (458.35):** C, 41.93; H, 8.58; N, 9.17. Found: C, 40.55; H, 8.06; N, 9.54.

### Example 18:

### Synthesis of O(C₆H₄N=PPh₃)₂CrCl₂ (30)

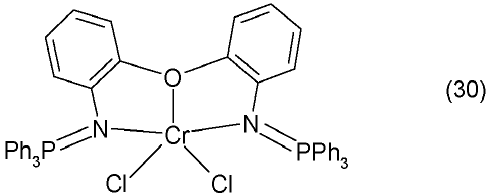

The same procedure was used as described for **13** except for using CrCl₂(THF)₂ (55 mg, 0.21 mmol), and O(C₆H₄N=PPh₃)₂ (150 mg, 0.21 mmol).
**Yield** of complex (30): 123 mg (69%). µ_{eff} = 4.95 BM

### Example 19:

### Synthesis of S(CH₂CH₂N=PPh₃)₂CrCl₂ (31)

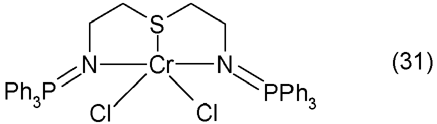

The same procedure was used as described for **13** except for using CrCl₂(THF)₂ (62 mg, 0.23 mmol) and 4 (150 mg, 0.23 mmol).
**Yield** of complex (31): 82 mg (47%). µ_{eff} = 4.78 BM

### Example20:

### Synthesis of HN(C₆H₄N=PPh₃)₂CrCl₂ (32)

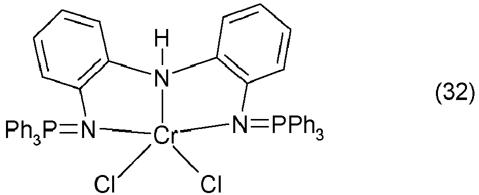

The same procedure was used as described for **13** except for using CrCl₂(THF)₂ (56 mg, 0.23 mmol) and 8 (150 mg, 0.21 mmol).
**Yield** of complex (32): 110 mg (62%). µ_{eff} = 4.87BM.
**Anal. Calcd. for C₄₈H₃₉Cl₂CrN₃P₂ (842.69)**: C, 68.41; H, 4.66; N, 4.99; **Found:** C, 66.02; H, 4.97; N 5.14

### EXAMPLES 21-22: Synthesis of cobalt complexes

### Example 21:

### Synthesis of HN(CH₂CH₂N=PPh₃)₂CoCl₂ (33)

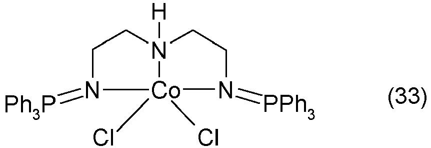

The same procedure was used as described for **13** except for using CoCl₂ (39 mg, 0.30 mmol) and 1 (200 mg, 0.32 mmol).
Yield of complex (33): 150 mg (66%). µ_{eff} = 4.10 BM
**Anal. Calcd. for C₄₀H₃₉Cl₂CoN₃P₂ (753.54)**: C, 63.76; H, 5.22; N, 5.5; **Found:** C, 62.51; H, 5.01; N 5.93

### Example 22:

### Synthesis of S(CH₂CH₂N=PPh₃)₂CoCl₂ (34)

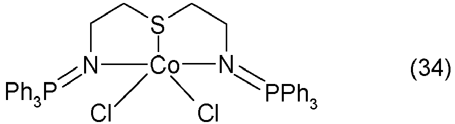

The same procedure was used as described for **13** except for using CoCl₂ (40 mg, 0.31 mmol), and **4** (200 mg, 0.31 mmol).
**Yield** of complex (34): 172 mg (72%). µ_{eff} = 4.25 BM
**Anal. Calcd. for C₄₀H₃₈Cl₂CoN₂P₂S (770.59):** C, 62.35; H, 4.97; N, 3.64. Found: C, 60.76; H, 4.71; N, 4.06.

### EXAMPLES 23 to 24: Synthesis of iron complexes

### Example 23:

### Synthesis of HN(CH₂CH₂N=PPh₃)₂FeCl₂ (35)

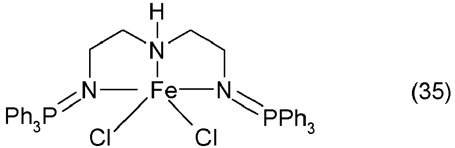

The same procedure was used as described for **13** except for using FeCl₂ (61mg, 0.48 mmol), and **1** (300 mg, 0.48 mmol).
**Yield** of complex (35): 300 mg (83%). µ_{eff} = 5.34 BM
**Anal. Calcd.** for **C₄₀H₃₉Cl₂FeN₃P₂ (750.46):** C, 64.02; H, 5.24; N, 5.60. **Found:** C, 63.17; H, 5.39; N 5.21.

### Example 24:

### Synthesis of MeN(C₆H₄N=PPh₃)₂FeCl₂ (36)

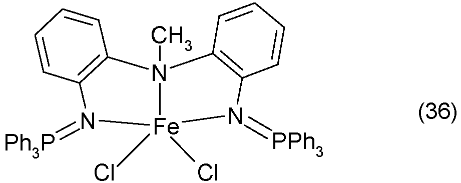

The same procedure was used as described for **13** except for using FeCl₂ (35 mg, 0.28 mmol), and **9** (203 mg, 0.28 mmol).
**Yield** of complex (36) 152 mg (62%). µ_{eff} = 5.42 BM

### EXAMPLE 25-27: Synthesis of neodymium complex catalysts:

### Example 25:

### Synthesis of HN(CH₂CH₂N=PPh₃)₂NdCl₃ (37)

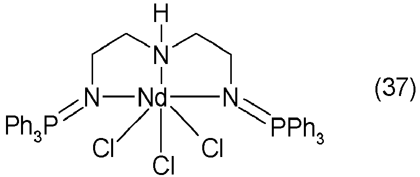

The same procedure was used as described for **13** except for using NdCl₃(THF)₃ (75 mg, 0.16 mmol), and 1 (100 mg, 0.16 mmol).
**Yield** of complex (37): 100 mg (71%);
**³¹P{¹H} NMR (CD₂Cl₂):** 38.4.
**Anal. Calcd. for C₄₀H₃₉Cl₃N₃NdP₂ (874.30):** C, 54.95; H, 4.50; N, 4.81. Found: C, 50.92; H, 4.36; N, 4.49.

### Example 26:

### Synthesis of (NC₅H₃)(CH₂N=PPh₃)₂NdCl₃ (38)

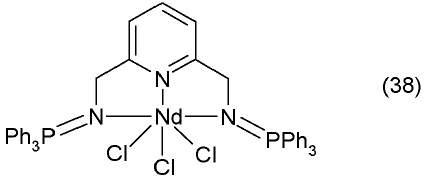

The same procedure was used as described for 13 except for using NdCl₃(THF)₃ (35 mg, 0.075mmol), and 10 (49 mg, 0.075 mmol).
Yield of complex (38): 41 mg (60%);

### Example 27:

### Synthesis of O(CH₂CH₂N=PPh₃)₂NdCl₃ (39)

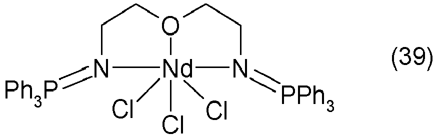

The same procedure was used as described for 13 except for using NdCl₃(THF)₃ ( 75 mg, 0.16 mmol), and 3 (100 mg, 0.16 mmol).
Yield of complex (39): 119 mg (85%);
³¹P{¹H} NMR (CD₂Cl₂): 54.0.

### Yield of complex (28): 63 mg (96%).

This compound was characterized by X-ray diffraction

### POLYMERIZATION SERIES:

### Typical polymerization procedures:

### Preparation of catalyst stock solution ([Cr] = 2 umol/ml):

A Schlenk flask was charged with 20 µmol of the respective complex, 2 ml of toluene and 8 ml of MAO (10 wt% in toluene).

### A 1,3-Butadiene Polymerization and 1,3-butadiene/acrylonitrile copolymerization procedure in a Schlenk Tube

A Schlenk tube was charged with 20 ml of 1,3-butadiene solution (20 wt% in toluene), the desired amount of acrylonitrile in those examples where a copolymerization was performed, 1 ml MAO (10 wt% in toluene) as scavenger and placed in a oil bath at the desired temperature. Polymerization was started by injecting *via* syringe the desired amount of a solution containing one of the complexes synthesized in the above Examples and carried out for the desired amount of time. The polymerization was terminated by venting the unreacted 1,3-butadiene, followed by addition of MeOH containing 0.01% of BHT as antioxidant and dilute HCl. After filtration the polymer was washed with MeOH and dried at 60°C under vacuum overnight.

### B 1,3-Butadiene Polymerization and 1,3-butadiene/acrylonitrile copolymerization procedure using Parr reactor

A 300 ml Parr reactor was assembled in the glove box and charged with the desired amount of acrylonitrile when needed. Outside the glovebox, 20 ml of 1,3-butadiene solution (20 wt% in toluene) were added and the reactor placed in an oil bath at the desired temperature. The temperature was allowed to equilibrate for 45 min prior injection of the scavenger and catalyst solution. 1 ml MAO (10 wt% in toluene) was injected as scavenger. The solution of one complex synthesized in the Examples above was injected and the polymerization stirred at the desired temperature for the desired amount of time. The polymerization was stopped by venting the unreacted monomer followed by addition MeOH containing 0.01% of BHT as antioxidant and dilute HCl. After filtration the polymer was washed with MeOH and dried at 60°C under vacuum overnight.

### C Isoprene Polymerization procedure in a Schlenk Tube

A Schlenk tube was charged with the respective complex (3.3mg, 4µmol), 5 ml of isoprene, 2.6 mL of MAO (10 wt% in toluene) and placed in a water bath at room temperature. Polymerization was carried out for 3 hours. The polymerization was terminated by venting the Schlenk tube, followed by addition of MeOH containing 0.01% of BHT as antioxidant and dilute HCl. After filtration the polymer was washed with MeOH and dried at 60°C under vacuum overnight.

The results of the polymerization series 1-3 are summarized in Tables 3-5:
"MAO/Cr" shall mean the molar ratio of aluminum contained in MAO to chromium.
The catalyst activity mentioned in Tables 3-5 is given in "g.mmol⁻¹.h⁻¹".
"nd" stands for "not determined".

**Table 3: Polymerization Series 1 (1,3-butadiene polymerization using Complex 13/MAO) (polymerization carried out according to procedure B in a 300 ml Parr reactor)**

| Loading of Complex 13 (µmol) | MAO/Cr | Temp (°C) | Time (min) | Polymer (g) | Activity | Mn (g/mol) | PDI | Polymer microstructure | | |
|---|---|---|---|---|---|---|---|---|---|---|
| | | | | | | | | trans-1, 4 | 1,2 | cis-1,4 |
| 10 | 640 | 25 | 5 | 1.9 | 2280 | 1,092,451 | 1.8 | 1.2 | 0.8 | 98.0 |
| 4 | 640 | 25 | 5 | 2 | 6000 | nd | nd | 0.8 | 0.8 | 98.4 |
| 1 | 640 | 25 | 30 | 0.13 | 260 | 382,000 | 2.5 | 1.6 | 0.5 | 97.9 |
| 1 | 640 | 50 | 30 | 0.14 | 280 | 235,000 | 2.6 | 1.9 | 0.7 | 97.4 |
| 1 | 3200 | 25 | 20 | 0.38 | 1140 | 832,000 | 1.8 | 2.0 | 1.5 | 96.5 |
| 1 | 3200 | 50 | 20 | 0.67 | 2010 | nd | nd | 2.4 | 1.6 | 96.1 |
| 0.5 | 3200 | 25 | 30 | 0.85 | 3400 | nd | nd | 0.3 | 1.1 | 98.6 |
| 0.5 | 6400 | 25 | 30 | 0.65 | 2600 | 1,290,000 | 1.9 | 0.1 | 1.4 | 98.5 |
| 0.5 | 6400 | 50 | 30 | 0.49 | 1960 | 138,000 | 3.4 | 0.7 | 1.3 | 98.1 |
| 0.5 | 6400 | 60 | 30 | 0.41 | 1640 | nd | nd | 1.1 | 1.1 | 97.8 |
| 0.5* | 6400 | 75 | 30 | 0.264 | 1056 | 202,000 | 2.1 | 2.3 | 1.8 | 95.9 |
| 0.5* | 6400 | 90 | 30 | 0.111 | 444 | 537,000 | 1.7 | 2.8 | 2.4 | 94.9 |

**Table 4: Polymerization Series 2 (Isoprene polymerization using Complex 13/MAO)**

| Loading of Complex 13 (µmol) | MAO/Cr | Temp (°C) | Time (min) | Polymer (g) | Activity | Mn (g/mol) | PDI | trans-1,4 | 1,2 | cis-1,4 | 3,4 |
|---|---|---|---|---|---|---|---|---|---|---|---|
| 4 | 640 | 25 | 180 | 0.1 | 8.33 | 230,000 | 1.9 | - | - | 87 | 13 |

**Table 5: Polymerization Series 3 (1,3-Butadiene polymerization using different complexes in combination with MAO)**

| Complex | | Ratio loading MAO/Cr | Time (min) | Polymer (g) | Activity | Conv. (%) | Mn (g/mol) | PDI | Polymer microstructure | | |
|---|---|---|---|---|---|---|---|---|---|---|---|
| No. | loading (mol) | | | | | | | | trans-1,4 | 1,2 | cis-1,4 |
| **20** | 10 | 640 | 15 | 1.12 | 448 | 35 | 781,000 | 2.2 | 0.9 | 1.8 | 97.3 |
| **20** | 5 | 650 | 10 | 0.293 | 352 | 9 | 962,000 | 3.2 | 1.6 | 1.7 | 96.7 |
| **20** | 5 | 900 | 10 | 0.479 | 575 | 15 | 2,010,000 | 2.0 | 0.1 | 1.6 | 98.3 |
| **20** | 2 | 1350 | 10 | 0.049 | 147 | 2 | 852,000 | 2.4 | 0.4 | 1.3 | 98.3 |
| **21** | 10 | 640 | 10 | 0.027 | 16 | 1 | - | - | 10 | 3.1 | 86.8 |
| **14** | 10 | 640 | 10 | 0.45 | 270 | 14 | 1,310,000 | 2.2 | 1.5 | 3.3 | 95.2 |
| **27** | 10 | 640 | 10 | 0.963 | 578 | 30 | 432,000 | 3.0 | 0.2 | 0.4 | 99.3 |
| **33** | 10 | 640 | 10 | 0.5 | 300 | - | - | - | 9.3 | 0.7 | 90 |
| **36** | 10 | 640 | 10 | 0.101 | 61 | 3 | - | - | - | - | - |
| **24** | 10 | 640 | 5 | 1.8 | 2160 | 58 | - | - | 1.3 | 0.5 | 98.2 |

**Table 6: Polymerization Series 4 (1,3-Butadiene/acrylonitrile copolymerization)**

| Complex | | Comonomers | MAO/ Cr | Temp (°C) | Time (min) | Polymer(g) | Acti- | Conv. (%) | Mn (g/mol) | PDI | Polymer microstructure | | |
|---|---|---|---|---|---|---|---|---|---|---|---|---|---|
| No. | Loading (µmol) | | | | | | | | | | trans -1,4 | 1,2 | cis-1,4 |
| **13** | 20 | Bd/ACN (10:1) | 640 | 25 | 30 | 0.055 | 5.50 | 1.8 | nd | nd | 40.4 | 4.8 | 54.7 |
| **13** | 10 | Bd/ACN (10:1) | 700 | 25 | 90 | 0.1 | 6.67 | 3.2 | 75,000 | 3.0 | 44.9 | 21 | 34 |
| **13** | 10 | Bd/ACN (10:1) | 700 | 50 | 90 | 0.095 | 6.33 | 3.1 | 64,000 | 2.2 | - | - | - |
| **13** | 10 | Bd/ACN (5:1) | 700 | 25 | 90 | 0.092 | 6.13 | 3.0 | 103,000 | 2.4 | 72.6 | 1.1 | 26.3 |
| **13** | 10 | Bd/ACN (10:1) | 700 | 25 | 1440 | 0.38 | 1.58 | 12.3 | 53,000 | 2.6 | 36.1 | 2.2 | 61.6 |
| **24** | 10 | Bd/ACN (10:1) | 700 | 25 | 90 | 0.14 | 9.33 | 4.5 | - | - | - | - | - |

**Table 7: Polymerization Series 5 (1,3-Butadiene/styrene copolymerization)**

| Complex | | Comonomers | MAO/ Cr | Temp (°C) | Time (min) | Polymer (g) | Activity | Conv. (%) | Mn (g/mol) | PDI | Polymer microstructure | | |
|---|---|---|---|---|---|---|---|---|---|---|---|---|---|
| No. | loading (µmol) | | | | | | | | | | trans -1,4 | 1,2 | cis-1,4 |
| **13** | 10 | Bd/S (10:1) | 640 | 25 | 5 | 2.2 | 2640 | 71.0 | 447,00 0 | 2.1 | 2.2 | 2.0 | 95.8 |
| **13** | 10 | Bd/S(1:1) | 640 | 25 | 720 | 0.5 | 4.17 | 16.1 | 98,000 | 2.3 | 7.4 | 1.3 | 91.3 |

**Table 8: Polymerization series 6 (1,3-Butadiene/acrylonitrile/styrene terpolymerization)**

| Complex | | Comonomers | MAO/ Cr | Temp (°C) | Time (min) | Poly mer (g) | Activity | (%) | Mn (g/mol) | PDI | Polymer microstructure | | |
|---|---|---|---|---|---|---|---|---|---|---|---|---|---|
| No. | loading (µmol) | | | | | | | | | | trans -1,4 | 1,2 | cis-1,4 |
| **13** | 10 | Bd/S/ACN (28:57:15) | 640 | 25 | 90 | 0.3 | 20.00 | 9.7 | 175,00 0 | 2.2 | 18.9 | 0.8 | 80.3 |

## Claims

1. A complex according to general formula (I) 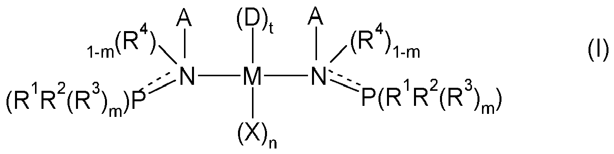 wherein
M represents a metal from Groups 3 to 9 of the Periodic Table of Elements or a lanthanide, preferably Sc, Y, Ti, Zr, Hf, V, Nb, Ta, Cr, Mo, W, Mn, Fe, Ru, Co or Nd, more preferably Cr, Mo, W, Fe, Ru, Co, or Nd and most preferably Cr, Fe, Co or Nd.
X are identical or different ligands,
n is 1,2, or 3,
R¹ R², R³, and R⁴ are identical or different and represent H, alkyl, aryl, alkaryl, or heteroaryl ligands,
m is 0 or 1,
D represents a ligand being able to act as a two electron donor,
t is 0 or 1,
A are identical or different monovalent groups or in the alternative both can be linked at the same time to D, if t = 1, with both A then representing divalent groups, and
wherein the bonds between P and N represent a double bond each, if m = 1 and in the alternative represent a single bond each, if m = 0.

2. The complex according to **claim 1, characterized in that**
X are identical or different and represent anionic coordinating or weekly coordinating ligands, preferably halide, pseudohalide, alkyl, cycloalkyl, aryl, arylalkyl, alkoxy, aryloxy, alkyldiketonate, aryldiketonate, carboxylate, alkylsulfonate, arylsulfonate, alkylthiol, arylthiol, alkylsulfonyl or alkylsulfinyl groups, or amide, more preferably chloride, methyl, phenyl, benzyl, CF₃COO, CH₃COO, CFH₂COO, (CH₃)₃CO, (CF₃)₂(CH₃)CO, (CF₃)(CH₃)₂CO, PhO (phenoxy), MeO (methoxy), EtO (ethoxy), benzoate, tosylate (p-CH₃-C₆H₄-SO₃), mesylate (CH₃-SO₃) or CF₃SO₃ (trifluoromethanesulfonate).

3. The complex according to claim 1 selected from the group consisting of
(i) a complex with t=1 and m=1 and having the general formula (I-a) 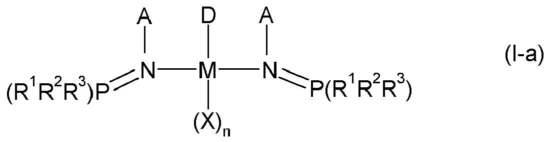 wherein X, n, A, D, R¹ R², and R³ may have all meanings mentioned in claim 1,
(ii) a complex with t=1 and m=0 and having the general formula (I-b) 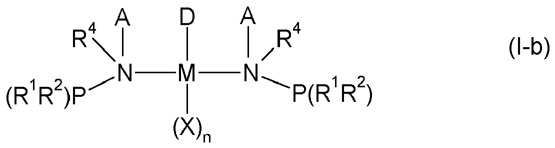 wherein X, n, A, D, R¹ R², and R⁴ may have all meanings mentioned in claim 1,
(iii) a complex with t=0 and m= 1 and having the general formula (I-c) 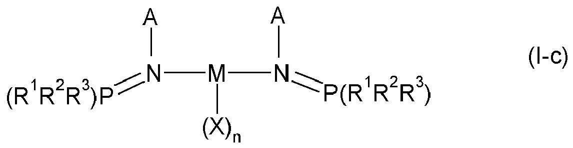 wherein X, n, A, D, R¹ R², and R³ may have all meanings mentioned in claim 1, and
(iv) a complex with t=0 and m=0 and having the general formula (I-d) 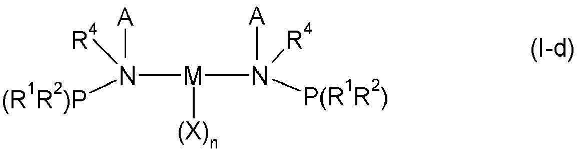 wherein X, n, A, D, R¹ R², and R⁴ may have all meanings mentioned in claim 1.

4. The complex according to **claim 3** wherein
**(i) in general formula (Ia)**
**M** is Sc, Y, Ti, Zr, Hf, V, Nb, Ta, Cr, Mo, W, Mn, Fe, Ru, Co or Nd, more preferably Cr, Mo, W, Fe, Ru, Co, or Nd and most preferably Cr, Fe, Co or Nd,
**X** are identical or different and represent halide, pseudohalide, alkyl, cycloalkyl, aryl, arylalkyl, alkoxy, aryloxy, alkyldiketonate, aryldiketonate, carboxylate, alkylsulfonate, arylsulfonate, alkylthiol, arylthiol, alkylsulfonyl or alkylsulfinyl groups, or amide,
**n** is 1,2 or 3,
**R¹, R², R³** are identical or different and represent H, alkyl, cycloalkyl, aryl, arylalkyl or heteroaryl, preferably H, branched or straight chain C₁-C₃₀-, more preferably C₁-C₂₀-alkyl; C₃-C₂₀-, more preferably C₅-C₈-cycloalkyl; C₆-C₂₄-, more preferably C₆-C₁₄ aryl; C₇-C₂₅-, more preferably C₇-C₁₅ arylalkyl; or C₆-C₂₄, more preferably C₆-C₁₄ heteroaryl, in which at least one carbon atom of the aromatic ring(s) is replaced by a heteroatom selected from nitrogen, oxygen and sulfur,
**A** are identical or different and represent H, alkyl, cycloalkyl, aryl, arylalkyl, or heteroaryl, preferably H, branched or straight chain C₁-C₃₀-alkyl, C₃-C₂₀-cycloalkyl, C₆-C₂₄ aryl, C₇-C₂₅ arylalkyl, or C₆-C₂₄ heteroaryl, in which at least one carbon atom of the aromatic ring(s) is replaced by a heteroatom selected from nitrogen, oxygen and sulfur, and more preferably H, branched or straight chain C₁-C₂₀-alkyl, C₅-C₈-cycloalkyl, C₆-C₁₄ aryl, C₇-C₁₅ arylalkyl, or C₆-C₁₄ heteroaryl, in which at least one carbon atom of the aromatic ring(s) is replaced by a heteroatom selected from nitrogen, oxygen and sulfur, and
**D** represents thiophene, furan, tetrahydrofuran, phosphine, sulfonated phosphine, phosphinimine, aminophosphine, phosphineoxide, phosphinesulfide, phosphineselenide, phosphate, phosphinite, phosphonite, phosphite, arsine, stibine, amine, amide, sulfoxide, sulfone, ether, carboxyl, nitrosyl, pyridine, thiol, thioether, selenoether, selenol, selenoxide or any other moiety able of acting as a 2 electron donor, comprising alkoxy, aryloxy, sulfone, alkyl, carbene, ketone, ester, pyridyl, substituted pyridyl, an imidazoline or an imidazolidine ligand,
**(ii) in general formula (Ib)**
**M** is Sc, Y, Ti, Zr, Hf, V, Nb, Ta, Cr, Mo, W, Mn, Fe, Ru, Co or Nd, more preferably Cr, Mo, W, Fe, Ru, Co, or Nd and most preferably Cr, Fe, Co or Nd,
**X** are identical or different and mean halide, pseudohalide, alkyl, cycloalkyl, aryl, arylalkyl, alkoxy, aryloxy, alkyldiketonate, aryldiketonate, carboxylate, alkylsulfonate, arylsulfonate, alkylthiol, arylthiol, alkylsulfonyl or alkylsulfinyl groups, or amide,
**n** is 1, 2, or 3,
**R¹, R², and R⁴** are identical or different and represent H, alkyl, cycloalkyl, aryl, arylalkyl, or heteroaryl, preferably H, branched or straight chain C₁-C₃₀-, more preferably C₁-C₂₀-alkyl; C₃-C₂₀-, more preferably C₅-C₈-cycloalkyl; C₆-C₂₄-, more preferably C₆-C₁₄ aryl; C₇-C₂₅-, more preferably C₇-C₁₅ arylalkyl; or C₆-C₂₄, more preferably C₆-C₁₄ heteroaryl, in which at least one carbon atom of the aromatic ring(s) is replaced by a heteroatom selected from nitrogen, oxygen and sulfur,
**A** are identical or different and represent H, alkyl, cycloalkyl, aryl or heteroaryl, preferably H, branched or straight chain C₁-C₃₀-alkyl, C₃-C₂₀-cycloalkyl, C₆-C₂₄ aryl, C₇-C₂₅ arylalkyl, or C₆-C₂₄ heteroaryl, in which at least one carbon atom of the aromatic ring(s) is replaced by a heteroatom selected from nitrogen, oxygen and sulfur, and more preferably H, branched or straight chain C₁-C₂₀-alkyl, C₆-C₁₄ aryl, C₇-C₁₅ arylalkyl, or C₆-C₁₄ heteroaryl, in which at least one carbon atom of the aromatic ring(s) is replaced by a heteroatom selected from nitrogen, oxygen and sulfur, and
**D** represents thiophene, furan, tetrahydrofuran, phosphine, sulfonated phosphine, phosphinimine, aminophosphine, phosphineoxide, phosphinesulfide, phosphineselenide, phosphate, phosphinite, phosphonite, phosphite, arsine, stibine, amine, amide, sulfoxide, sulfone, ether, carboxyl, nitrosyl, pyridine, thiol, thioether, selenoether, selenol, selenoxide or any other moiety able of acting as a 2 electron donor such as alkoxy, aryloxy, sulfone, alkyl, carbene, ketone, ester, pyridyl, substituted pyridyl, an imidazoline or imidazolidine ligand,
**(iii) in general formula (Ic)**
**M** is Sc, Y, Ti, Zr, Hf, V, Nb, Ta, Cr, Mo, W, Mn, Fe, Ru, Co or Nd, more preferably Cr, Mo, W, Fe, Ru, Co, or Nd and most preferably Cr, Fe, Co or Nd,
**X** are identical or different and represent halide, pseudohalide, alkyl, cycloalkyl, aryl, arylalkyl, alkoxy, aryloxy, alkyldiketonate, aryldiketonate, carboxylate, alkylsulfonate, arylsulfonate, alkylthiol, arylthiol, alkylsulfonyl or alkylsulfinyl groups, or amide,
**n** is 1,2 or 3,
**R¹, R², R³** are identical or different and represent H, alkyl, cycloalkyl, aryl, arylalkyl, or heteroaryl, preferably H, branched or straight chain C₁-C₃₀-, more preferably C₁-C₂₀-alkyl; C₃-C₂₀-, more preferably C₅-C₈-cycloalkyl; C₆-C₂₄-, more preferably C₆-C₁₄ aryl; C₇-C₂₅-, more preferably C₇-C₁₅ arylalkyl; or C₆-C₂₄, more preferably C₆-C₁₄ heteroaryl, in which at least one carbon atom of the aromatic ring(s) is replaced by a heteroatom selected from nitrogen, oxygen and sulfur, and
**A** are identical or different and represent H, alkyl, cycloalkyl, aryl, arylalkyl, or heteroaryl, preferably H, branched or straight chain C₁-C₃₀-alkyl, C₃-C₂₀-cycloalkyl, C₆-C₂₄ aryl, C₇-C₂₅ arylalkyl, or C₆-C₂₄ heteroaryl, in which at least one carbon atom of the aromatic ring(s) is replaced by a heteroatom selected from nitrogen, oxygen and sulfur, and more preferably H, branched or straight chain C₁-C₂₀-alkyl, C₅-C₈-cycloalkyl, C₆-C₁₄ aryl, C₇-C₁₅ arylalkyl or C₆-C₁₄ heteroaryl, in which at least one carbon atom of the aromatic ring(s) is replaced by a heteroatom selected from nitrogen, oxygen and sulfur, or
**(iv) in general formula (Id)**
**M** is Sc, Y, Ti, Zr, Hf, V, Nb, Ta, Cr, Mo, W, Mn, Fe, Ru, Co or Nd, more preferably Cr, Mo, W, Fe, Ru, Co, or Nd and most preferably Cr, Fe, Co or Nd,
**X** are identical or different and mean halide, pseudohalide, alkyl, cycloalkyl, aryl, arylalkyl, alkoxy, aryloxy, alkyldiketonate, aryldiketonate, carboxylate, alkylsulfonate, arylsulfonate, alkylthiol, arylthiol, alkylsulfonyl or alkylsulfinyl groups, or amide,
**n** is 1, 2, or 3,
**R¹, R², and R⁴** are identical or different and represent H, alkyl, cycloalkyl, aryl, arylalkyl, or heteroaryl, preferably H, branched or straight chain C₁-C₃₀-, more preferably C₁-C₂₀-alkyl; C₃-C₂₀-, more preferably C₅-C₈-cycloalkyl; C₆-C₂₄-, more preferably C₆-C₁₄ aryl; C₇-C₂₅-, more preferably C₇-C₁₅ arylalkyl; or C₆-C₂₄, more preferably C₆-C₁₄ heteroaryl, in which at least one carbon atom of the aromatic ring(s) is replaced by a heteroatom selected from nitrogen, oxygen and sulfur,
**A** are identical or different and represent H, alkyl, cycloalkyl, aryl or heteroaryl, preferably H, branched or straight chain C₁-C₃₀-alkyl, C₃-C₂₀-cycloalkyl, C₆-C₂₄ aryl, C₇-C₂₅ arylalkyl, or C₆-C₂₄ heteroaryl, in which at least one carbon atom of the aromatic ring(s) is replaced by a heteroatom selected from nitrogen, oxygen and sulfur, and more preferably H, branched or straight chain C₁-C₂₀-alkyl, C₆-C₁₄ aryl, C₇-C₁₅ arylalkyl, or C₆-C₁₄heteroaryl, in which at least one carbon atom of the aromatic ring(s) is replaced by a heteroatom selected from nitrogen, oxygen and sulfur.

5. The complex according to **claim 3** wherein
**(i) in general formula (Ia)**
**M** is Sc, Y, Ti, Zr, Hf, V, Nb, Ta, Cr, Mo, W, Mn, Fe, Ru, Co or Nd, more preferably Cr, Mo, W, Fe, Ru, Co, or Nd and most preferably Cr, Fe, Co or Nd,
**X** are identical or different and represent halide, pseudohalide, alkyl, cycloalkyl, aryl, arylalkyl, alkoxy, aryloxy, alkyldiketonate, aryldiketonate, carboxylate, alkylsulfonate, arylsulfonate, alkylthiol, arylthiol, alkylsulfonyl or alkylsulfinyl groups, or amide,
**n** is 1, 2, or 3,
**m** is 1,
**A** are identical or different, **both divalent and linked to the ligand D,** and mean C₁-C₂₀ alkylene, C₅-C₂₀ cycloalkylene or 1,2-phenylene, more preferably methylene, ethylene or 1,2-phenylene,
**D** means -S-, -O-, -N(R⁵)-, -P(R⁵)-, -As(R⁵)-, arylene, heteroarylene, partially or fully saturated analogues of such arylene and heteroarylene moieties, more preferably 2,6-pyridinylene, 2,5-furanylene, 2,6-thiophenylene, and 2,5-imidazolylene, and
**R¹, R², R³ and R⁵** are identical or different and represent H, alkyl, cycloalkyl, aryl, alkylaryl, or heteroaryl, preferably H, branched or straight chain C₁-C₃₀-, more preferably C₁-C₂₀-alkyl; C₃-C₂₀-, more preferably C₅-C₈-cycloalkyl; C₆-C₂₄-, more preferably C₆-C₁₄ aryl; C₇-C₂₅-, more preferably C₇-C₁₅ arylalkyl; or C₆-C₂₄, more preferably C₆-C₁₄ heteroaryl, in which at least one carbon atom of the aromatic ring(s) is replaced by a heteroatom selected from nitrogen, oxygen and sulfur, or
**(ii) in general formula (Ib)**
**M** is Sc, Y, Ti, Zr, Hf, V, Nb, Ta, Cr, Mo, W, Mn, Fe, Ru, Co or Nd, more preferably Cr, Mo, W, Fe, Ru, Co, or Nd and most preferably Cr, Fe, Co or Nd,
**X** are identical or different and represent halide, pseudohalide, alkyl, cycloalkyl, aryl, arylalkyl, alkoxy, aryloxy, alkyldiketonate, aryldiketonate, carboxylate, alkylsulphonate, arylsulphonate, alkylthiol, arylthiol, alkylsulphonyl or alkylsulphinyl groups, or amide,
**n** is 1,2, or 3,
**A** are identical or different, **both divalent and linked to the ligand D,** and mean C₁-C₂₀ alkylene, C₅-C₂₀ cycloalkylene or 1,2-phenylene, more preferably methylene, ethylene or 1,2-phenylene,
**D** means -S-, -O-, -N(R⁵)-, -P(R⁵)-, -As(R⁵)-, arylene, heteroarylene, partially or fully saturated analogues of such arylene and heteroarylene moieties, more preferably 2,6-pyridinylene, 2,5-furanylene, 2,5-thiophenylene, and 2,5-imidazolylene, and
**R¹, R², R⁴** and **R⁵** are identical or different and represent H, alkyl, cycloalkyl, aryl, arylalkyl, or heteroaryl, preferably H, branched or straight chain C₁-C₃₀-, more preferably C₁-C₂₀-alkyl; C₃-C₂₀-, more preferably C₅-C₈-cycloalkyl; C₆-C₂₄-, more preferably C₆-C₁₄ aryl; C₇-C₂₅-, more preferably C₇-C₁₅ arylalkyl; or C₆-C₂₄, more preferably C₆-C₁₄ heteroaryl, in which at least one carbon atom of the aromatic ring(s) is replaced by a heteroatom selected from nitrogen, oxygen and sulfur.

6. The complex according to claim 3 wherein
**(i) in general formula (Ia)**
**M** is Sc, Y, Ti, Zr, Hf, V, Nb, Ta, Cr, Mo, W, Mn, Fe, Ru, Co or Nd, more preferably Cr, Mo, W, Fe, Ru, Co, or Nd and most preferably Cr, Fe, Co or Nd,
**X** are identical and represent halide, pseudohalide, alkyl, cycloalkyl, aryl, arylalkyl, alkoxy, aryloxy, alkyldiketonate, aryldiketonate, carboxylate, alkylsulfonate, arylsulfonate, alkylthiol, arylthiol, alkylsulfonyl or alkylsulfinyl groups, or amide,
**n** is 2 or 3,
**A** are identical or different and mean C₁-C₂₀ alkylene, C₅-C₂₀ cycloalkylene or 1,2-phenylene, more preferably methylene, ethylene or 1,2-phenylene,
**D** means -N(R⁵)-, -O-, or -S-, and
**R¹, R², R³ and R⁵** are identical or different and represent H, branched or straight chain C₁-C₂₀-alkyl, C₅-C₈-cycloalkyl, C₆-C₁₄ aryl, C₇-C₁₅ arylalkyl or C₆-C₁₄ heteroaryl.

7. The complex according to **claim 3** wherein
**(iii) in general formula (Ic)**
**M** Cr, Fe, Co or Nd,
**X** are identical and represent halide,
**n** is 2 or 3, **R¹, R², and R³** are identical or different and represent H, branched or straight chain C₁-C₂₀-alkyl, C₅-C₈-cycloalkyl, C₆-C₁₄ aryl, C₇-C₁₅ arylalkyl, or C₆-C₁₄ heteroaryl, in which at least one carbon atom of the aromatic ring(s) is replaced by a heteroatom selected from nitrogen, oxygen and sulfur,
**A** are identical or different and represent H, alkyl, cycloalkyl, aryl, arylalkyl, arylalkyl, or heteroaryl, preferably H, branched or straight chain C₁-C₃₀-alky 1, C₃-C₂₀-cycloalkyl, C₆-C₂₄ aryl, C₇-C₂₅ arylalkyl, or C₆-C₂₄ heteroaryl, in which at least one carbon atom of the aromatic ring(s) is replaced by a heteroatom selected from nitrogen, oxygen and sulfur, and more preferably H, branched or straight chain C₁-C₂₀-alkyl, C₅-C₈-cycloalkyl, C₆-C₁₄ aryl, C₇-C₁₅ arylalkyl,
or C₆-C₁₄ heteroaryl, in which at least one carbon atom of the aromatic ring(s) is replaced by a heteroatom selected from nitrogen, oxygen and sulfur.

8. The complex according to **claim 1** having the formulae (13) to (39)

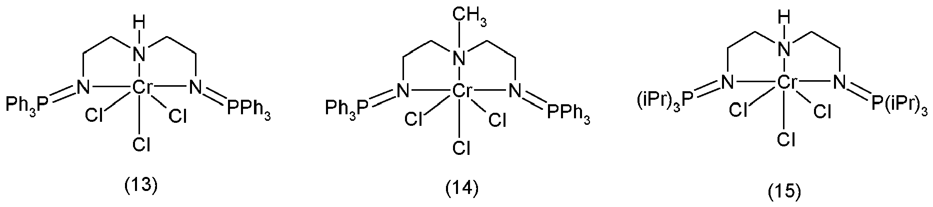

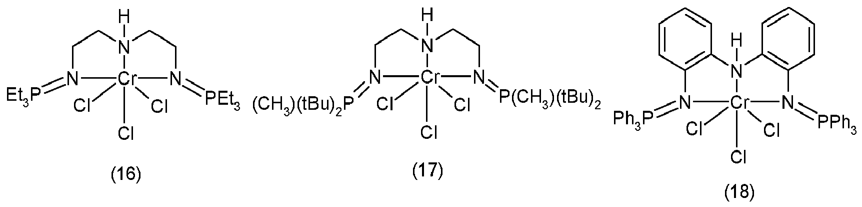

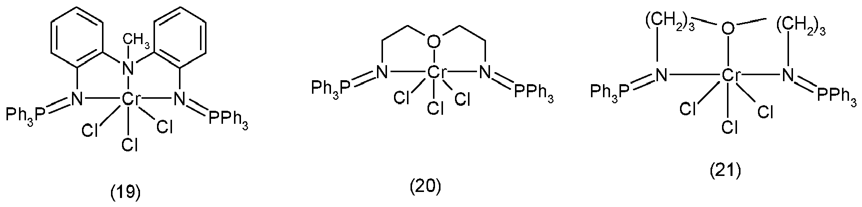

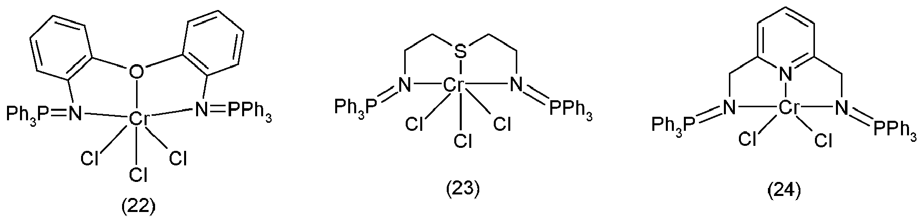

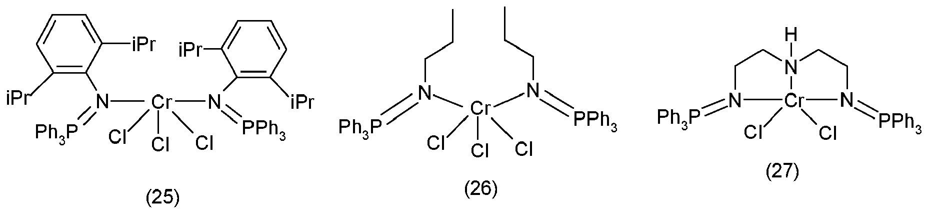

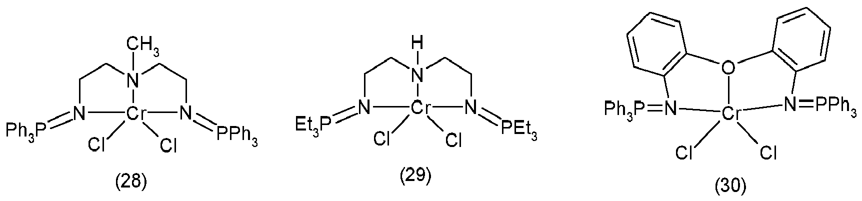

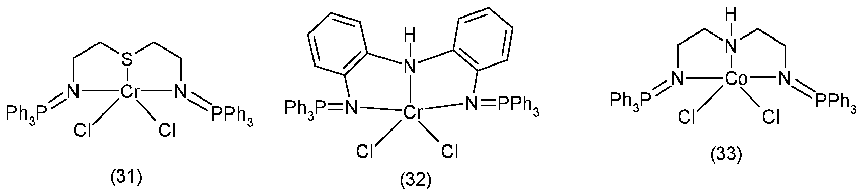

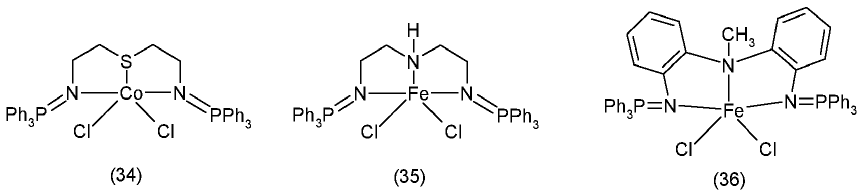

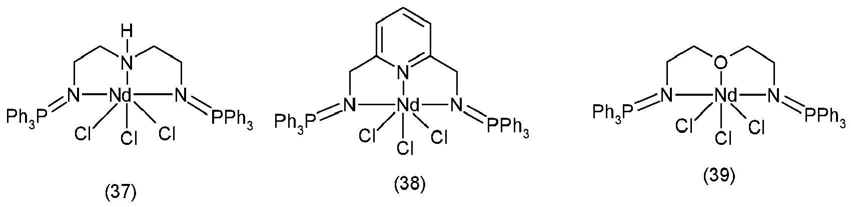

9. A process for preparing polymers having repeating units based on at least one diene comprising subjecting at least one diene to a polymerization in the presence of a metal complex according to claim 1 or 8.

10. The process according to claim 9, **characterized in that** dienes having the general formula (IV) are used,
R^{a}R^{b}C=CR^{c}CR^{d}=CR^{e}R^{f} (IV)
wherein R^{a} to R^{f} are independently selected from hydrogen, halogen, alkyl, cycloalkyl, aryl, araalkyl and alkaryl, preferably R^{a} to R^{f} are independently of one another chloro, methyl, ethyl, n-propyl, isopropyl, or single or mixtures of isomeric forms of pentyl, hexyl octyl, decyl; or aryl groups selected from phenyl, 2-chloro-phenyl, o-biphenyl, naphtyl, phenantryl and anthryl; or alkaryl groups selected from phenylmethyl, phenylethyl, phenyl-n-propyl, and naphtylmethyl; or aralkyl groups selected from tolyl, xylyl, mesityl and 2-methylnaphtyl

11. The process according to claim 9 or 10, wherein the diene employed has the general formula R^{a}H-C=CR^{d}-CH=CH₂ wherein R^{a} and R^{d} are independently selected from hydrogen, chlorine and a C₁ to C₁₀ hydrocarbyl group, preferably 1,3-butadiene, 2-methyl-1,3-butadiene (isoprene), and 2-chloro-1,3-butadiene (chloroprene).

12. The process according to claim 9 or 10, wherein the diene is copolymerised with one or more further copolymerizable monomers, preferably with an α,β-unsaturated nitrile, more preferably (C₃-C₅) α,β-unsaturated nitriles and most preferably acrylonitrile, methacrylonitrile, ethacrylonitrile or mixtures thereof.

13. The process according to claim 12, wherein at least one further copolymerisable monomer is used selected from the group consisting of aromatic vinylmonomers, preferably styrene, α-methylstyrene and vinylpyridine, fluorine-containing vinylmonomers, preferably fluoroethyl vinyl ether, fluoropropyl vinyl ether, o-fluoromethylstyrene, vinyl pentafluorobenzoate, difluoroethylene and tetrafluoroethylene, copolymerizable anti-ageing monomers, preferably N-(4-anilinophenyl)acrylamide, N-(4-anilinophenyl)methacrylamide, N-(4-anilinophenyl) cinnamides, N-(4-anilinophenyl)crotonamide, N-phenyl-4-(3-vinylbenzyloxy)aniline and N-phenyl-4-(4-vinylbenzyloxy)aniline, non-conjugated dienes, preferably 4-cyanocyclohexene and 4-vinylcyclohexene, alkynes, preferably 1-butyne and 2-butyne, copolymerizable termonomers containing carboxyl groups, selected from the group consisting of α,β-unsaturated monocarboxylic acids, preferably acrylic acid and methacrylic acid, their esters, preferably their alkyl esters and alkoxyalkyl esters, their amides, α,β-unsaturated dicarboxylic acids, preferably maleic acid, fumaric acid, crotonic acid, itaconic acid, citraconic acid and mesaconic acid, their monoesters or diesters, preferably alkyl mono- or di-esters, alkoxyalkyl mono- or di-esters, cycloalkyl mono- or di-esters, alkylcycloalkyl mono- or di-esters, and aryl mono- or di-esters, or their corresponding anhydrides or amides.

14. The process according to claim 9 or 10, wherein the polymerization is carried out in the additional presence of at least one alkylating agent, preferably being organometallic compounds of electropositive metals more preferably of Group 1, 2, and 13 metals (Groups IA, IIA, and IIIA metals), more preferably selected from organolithium, organoaluminum, organozinc and organomagnesium compounds, and even more preferably aluminoxanes and most preferably oligomeric linear aluminoxanes having the general formula (A-1) or oligomeric cyclic aluminosiloxanes having the general formula (A-2) 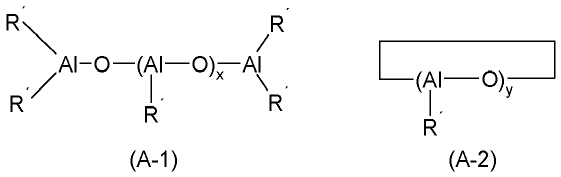 wherein x is an integer in the range of 1 to 100, preferably 10 to 50, y is an integer in the range of 2 to 100, preferably 3 to 20 and each R, which may be the same or different, is a monovalent organic group that is attached to the aluminium atom via a carbon atom, preferably alkyl, cycloalkyl, substituted cycloalkyl, alkenyl, cycloalkenyl, substituted cycloalkenyl, aryl, substituted aryl, aralkyl, alkaryl, allyl, and alkynyl.

15. The process according to claim 9 or 10, wherein the molar ratio of the alkylating agent, most referably at least one aluminoxane compound, to the catalyst according to general formula (I) lies in a range of between 500-10,000, preferably in the range of from 500 to 5,000, more preferably in the range of from 600 to 2000 and most preferably 600 to 700.

16. The process according to to claim 9 or 10, wherein the metal complex of formula (I) is present in an amount in the range of 10⁻⁷ to 10⁻³ mmol metal per mol of monomer, preferably in an amount in the range of 10⁻⁶ to 10⁻⁴ mmol transition metal per mol of monomer.
